# EUROPEAN PATENT SPECIFICATION

(11) **EP 4 556 146 B1**
(45) Date of publication and mention of the grant of the patent: **30.09.2026**
(21) Application number: 23315427.7
(22) Date of filing: 20.11.2023
(51) Int. Cl.: B23C 5/06, B23C 5/20, B23C 5/22

(54) **CUTTING TOOL WITH DOUBLE-SIDED TANGENTIAL CUTTING INSERT**
SCHNEIDWERKZEUG MIT DOPPELSEITIGEM TANGENTIALSCHNEIDEINSATZ
OUTIL DE COUPE AVEC INSERT DE COUPE TANGENTIEL DOUBLE FACE

(43) Date of publication of application: 21.05.2025
(73) Proprietor: Seco Tools AB, 737 82 Fagersta (SE)
(72) Inventor: Tenevot, Marine, 737 82 FAGERSTA (SE); Jakobi, Tobias, 737 82 FAGERSTA (SE); Stabel, Thorsten, 737 82 FAGERSTA (SE); Skouras, Giorgos, 737 82 FAGERSTA (SE); Bonenfant, Antoine, 737 82 FAGERSTA (SE); Auzenat, François, 737 82 FAGERSTA (SE); Nallapati, Chanikya, 737 82 FAGERSTA (SE); Gurav, Sachin, 737 82 FAGERSTA (SE)
(74) Representative: Sandvik

(56) References cited:
- DE-A1- 102014 116 857
- US-A1- 2016 167 137
- US-B2- 8 282 320
- US-B2- 8 702 353

## Description

### FIELD OF THE INVENTION AND PRIOR ART

The present invention relates to a cutting tool according to the preamble of claim 1. An example of such a cutting tool is known from US 2016/167137 A1.

A cutting tool in the form of a milling or turning tool may be provided with one or more cutting inserts detachably mounted in a respective insert seat in a tool body of the cutting tool. Each individual cutting insert may be provided with different sets of cutting edges, to thereby allow each cutting insert to be turned into different working positions. When a cutting edge of a set of cutting edges has been worn out, the cutting insert may be repositioned in its insert seat and mounted in a new working position with another set of cutting edges in an active cutting position.

A tangential cutting insert may also be referred to as an on-edge cutting insert and is fixed to a tool body by means of a fastening element in the form of a screw that extends through a through hole in the cutting insert and is engaged in a screw hole in a support surface in an insert seat in the tool body, wherein the through hole in the cutting insert extends through two opposite faces of the cutting insert that lack rake surfaces. Thus, in a tangential cutting insert, the through hole for the fastening element does not extend through any of the faces of the cutting insert that are provided with surfaces intended to serve as rake surfaces. Furthermore, a tangential cutting insert is mounted in an insert seat in a tool body where the screw hole for the fastening element is provided in a radial or axial support surface in the insert seat and not in a tangential support surface in the insert seat, which implies that said screw hole extends in the. radial or axial direction of the tool body, or somewhat obliquely to the radial or axial direction, and not in the tangential direction of the tool body.

A double-sided tangential cutting insert with four different working positions has two different working positions on each one of two opposite end faces of the cutting insert that are configured to serve as leading and trailing faces of the cutting insert when mounted to a tool body and as seen in an intended direction of rotation of the tool body, which implies that such a cutting insert has two sets of cutting edges located along the periphery of a first end face and two other sets of cutting edges located along the periphery of an opposite second end face. This type of tangential cutting insert may be used in four different working positions, two on each end face, when mounted in an insert seat having the screw hole for the fastening element provided in a radial support surface in the insert seat. When this type of tangential cutting insert is mounted to an insert seat in any of its four working positions, a substantially planar surface on the end face presently serving as trailing face of the cutting insert will serve as tangential abutment surface of the cutting insert and abut against a tangential support surface in the insert seat.

Cutting inserts for use in a milling or turning tool are normally produced by pressing and sintering. Inaccuracies in the shape of the press tool may contribute to unpredictable surface imperfections of the cutting inserts and the sintering will cause deviations from the desired shape of the cutting inserts. These shape deviations and surface imperfections may on some cutting inserts be remedied by surface grinding after the pressing and sintering.

Cutting tools with double-sided tangential cutting inserts with four different working positions are previously known in various configurations and examples of such cutting tools are for instance disclosed in EP 3 243 590 A1 and US 2016/0167137 A1. On a tangential cutting insert of this type, the space available for the tangential abutment surface on each end face is restricted, which results in a comparatively small tangential contact area between the cutting insert and the insert seat. Furthermore, when the tangential abutment surface on each end face of the cutting insert is depressed in relation to the longitudinal edges of the associated end face in the manner illustrated in EP 3 243 590 A1 and US 2016/0167137 A1, it is difficult to subject the tangential abutment surfaces to grinding, which may make it necessary to accept surface imperfections of the tangential abutment surfaces and small deviations from desired perfectly flat surfaces, which in combination with the restricted size of the tangential abutment surfaces will result in an impaired support from the tangential abutment surface when the tangential cutting insert is mounted to an associated insert seat.

Even though the cutting inserts may have surface imperfections and deviations from the desired shape, the deviations in shape between different cutting insert produced with one and the same press tool are normally very small and almost negligible. Furthermore, the unintended and undesired deviations in shape between opposite end faces, or between other mutually opposite side faces, of an individual double-sided tangential cutting insert are also very small and almost negligible.

### OBJECT OF THE INVENTION

The object of the present invention is to provide a cutting tool of the above-mentioned type that has a new and favourable design.

### SUMMARY OF THE INVENTION

According to the invention, said object is achieved by means of a cutting tool having the features defined in claim 1.

The cutting tool according to the invention comprises:
- a tool body having a front end and an opposite rear end, the rear end being configured for attachment to a machine;
- at least one insert seat provided in the tool body, wherein the insert seat is configured to accommodate a double-sided tangential cutting insert, the insert seat comprising a radial support surface, an axial support surface arranged at an angle to the radial support surface and a tangential support surface arranged at an angle to the radial support surface and at an angle to the axial support surface;
- a double-sided tangential cutting insert with four different working positions releasably mountable in said at least one insert seat; and
- a fastening element in the form of a screw associated with said cutting insert and by means of which said cutting insert may be releasably fixed to said at least one insert seat in any of its four working positions, wherein this fastening element is configured to extend through a through hole in said cutting insert and to be in threaded engagement with a screw hole in said at least one the insert seat.

The above-mentioned cutting insert comprises:
- two end faces arranged opposite to each other on opposite sides of the cutting insert, wherein the two end faces are configured to serve as rake faces, one at a time, and to constitute leading and trailing faces of the cutting insert when mounted in said at least one insert seat, and wherein a peripheral surface extends around the cutting insert between the two end faces;
- two major side faces included in the peripheral surface and arranged opposite to each other on opposite sides of the cutting insert;
- two minor side faces included in the peripheral surface and arranged opposite to each other on opposite sides of the cutting insert, each one of the two minor side faces being arranged between the two major side faces;
- four corner side faces included in the peripheral surface and arranged at a respective corner of the peripheral surface between a major side face and a minor side face;
- a through hole extending through the cutting insert between the two major side faces; and
- four primary cutting edges, wherein two of the four primary cutting edges extend along opposite longitudinal edges of a first one of the two end faces and are formed at an intersection between this end face and a respective one of the two major side faces, and the other two primary cutting edges of the four primary cutting edges extend along opposite longitudinal edges of the other one of the two end faces and are formed at an intersection between this end face and a respective one of the two major side faces,
wherein each one of the two end faces is provided with a substantially planar abutment surface that is located on the end face between said longitudinal edges thereof, and wherein the cutting insert, when mounted in said at least one insert seat in any of its four working positions, is configured to abut against the radial support surface in the insert seat through a surface on one of the two major side faces, abut against the axial support surface in the insert seat through a surface on one of the two minor side faces and abut against the tangential support surface in the insert seat through the abutment surface on one of the two end faces.

When the cutting insert is mounted to said at least one insert seat in a position with a first one of the two end faces serving as leading face of the cutting insert and a second one of the two end faces serving as trailing end of the cutting insert, one or more surfaces on the first end face will serve as rake surfaces of the cutting insert and the abutment surface on the opposite second end face will serve as tangential abutment surface of the cutting insert. When the cutting insert is mounted to a tool body in a position with the second end face serving as leading face of the cutting insert and the first end face serving as trailing end of the cutting insert, one or more surfaces on the second end face will serve as rake surfaces of the cutting insert and the abutment surface on the opposite first end face will serve as tangential abutment surface of the cutting insert.

In a double-sided tangential cutting insert of the type here in question, the distance between the two major side faces is smaller than the distance between the two end faces and also smaller than the distance between the two minor side faces. The two major side faces are preferable identical to each other, within manufacturing tolerances. Furthermore, in a double-sided tangential cutting insert of the type here in question, said abutment surfaces on the opposite end faces of the cutting insert are substantially parallel with each other, i.e. parallel with each other within manufacturing tolerances.

According to the invention, a support member with an auxiliary support surface is formed in said at least one insert seat, wherein the auxiliary support surface is configured to face a mating surface on the end face of the cutting insert that faces the tangential support surface in the insert seat when the cutting insert is mounted in the insert seat in any of its four working positions, and wherein the cutting insert and said support member are so adapted to each other that there is a play of 0.01-0.04 mm between the auxiliary support surface and said mating surface when the cutting insert is mounted in the insert seat in any of its four working positions with the tool body in a brand new condition. The auxiliary support surface is facing tangentially forward, as seen in an intended direction of rotation of the tool body. Said play implies that there is no contact between the auxiliary support surface and the cutting insert when the tool body is in a brand new condition and has still not been used for machining of workpieces.

That the support member is formed in the insert seat implies that the support member is formed as an integrated part of the insert seat and is arranged in a fixed, i.e. non-adjustable, position in the insert seat. The auxiliary support surface is preferably smooth.

A cutting insert is normally made of hard and wear-resistant material, such as cemented carbide, whereas the tool body is made of a softer and more deformable material, usually steel. In practice, this implies that, during the machining of workpieces, minor deformations will arise in the insert seats of the tool body by embossing, i.e. plastic deformation, particularly of the parts of the tangential support surface where each insert seat is in contact with the abutment surface on an end face of the associated cutting insert. According to the present invention, advantage is derived from this embossing for the achievement of a stable support for the cutting insert in the associated insert seat. When the double-sided tangential cutting insert is mounted in a previously unused tool body, i.e. a tool body that is in a brand new condition and has still not been used in the machining of workpieces, there is initially a very small play between the auxiliary support surface on the support member and the mating surface on the end face of the cutting insert that faces the tangential support surface in the insert seat and consequently no contact between the auxiliary support surface and the mating surface. However, in this situation, there is of course contact between the tangential support surface in the insert seat and the abutment surface on the end face of the cutting insert that faces the tangential support surface in the insert seat, between the radial support surface in the insert seat and an abutment surface on the major side face of the cutting insert that faces the radial support surface in the insert seat, and between the axial support surface in the insert seat and an abutment surface on the minor side face of the cutting insert that faces the axial support surface in the insert seat. During the subsequent machining of workpieces, the tangential support surface in the insert seat will be subjected to embossing at the interface with the corresponding abutment surface on the cutting insert under the effect of pressure from the cutting forces, micro-vibrations and heat, which will cause a closer contact between the tangential support surface in the insert seat and the corresponding abutment surface on the cutting insert and finally result in contact between the auxiliary support surface on the support member and the mating surface on the cutting insert. The ensuing contact between the auxiliary support surface in the insert seat and the mating surface on the cutting insert will provide additional tangential support for the cutting insert in the insert seat and contribute to a stable and reliable support for the cutting insert in the insert seat. It will hereby be possible to achieve a stable and reliable support for the cutting insert in the insert seat despite surface imperfections of the abutment surface on the end face of the cutting insert that faces the tangential support surface in the insert seat and despite the restricted size of this abutment surface.

The tangential support surface in said at least one insert seat is preferably perpendicular to the radial support surface in the insert seat. The axial support surface in the insert seat may be perpendicular to the radial support surface in the insert seat but may also have any other suitable inclination in relation to the radial support surface in the insert seat.

According to an embodiment of the invention, the support member is formed as a protrusion in said at least one insert seat, wherein the support member protrudes from an area of the insert seat that surrounds the support member, i.e. extends all around the support member, and wherein the auxiliary support surface constitutes an upper surface on the protrusion. Hereby, the support member with the auxiliary support surface will constitute a distinct part of the insert seat and the auxiliary support surface will be clearly distinguishable from other surfaces in the insert seat.

According to another embodiment of the invention, the support member comprises a peripheral surface that surrounds the auxiliary support surface, i.e. extends all around the auxiliary support surface, and forms a slope between the auxiliary support surface and said area of the insert seat that surrounds the support member. The peripheral surface of the support member preferably comprises a concave lower part, through which the peripheral surface of the support member adjoins to said area of the insert seat that surrounds the support member. This concave lower part of the peripheral surface extends all around support member at the base thereof and forms a smooth transition from the surrounding area of the insert seat to the support member.

The auxiliary support surface is preferably substantially flat. However, depending on the shape of the end faces of the cutting insert, the auxiliary support surface may also have any other suitable shape adapted to the shape of the mating surface on each end face of the cutting insert.

Another embodiment of the invention is characterized in:
- that an imaginary first median plane extends halfway between the two major side faces of said cutting insert perpendicularly to a centre axis of the through hole; and
- that said support member is so positioned in said at least one insert seat that said mating surface on the cutting insert is located on the associated end face at a position between the first median plane and the major side face of the cutting insert that faces away from the radial support surface in the insert seat when the cutting insert is mounted in the insert seat in any of its four working positions.

These positions of the support member and the mating surface on the cutting insert are well adapted to the position of the primary cutting edge that is presently in an active cutting position, and these positions of the support member and the mating surface on the cutting insert are favourable for the achievement of a stable support for the cutting insert in the insert seat during the machining of workpieces.

According to another embodiment of the invention, the tangential support surface is divided into a first tangential support sub surface and a second tangential support sub surface located at a distance from each other as seen in an axial direction of the tool body. By dividing the tangential support surface into two separate and mutually spaced apart sub surfaces, it will be possible to ensure an initial tangential support for the cutting insert at two distinct and mutually separated areas on the abutment surface on the end face of the cutting insert that faces the tangential support surface in the insert seat, which is particularly favourable when this abutment surface has considerable surface imperfections. However, the tangential support surface in said at least one insert seat may as an alternative be formed as a continuous surface.

According to another embodiment of the invention, the first tangential support sub surface is planar and extends in a first plane and the second tangential support sub surface is planar and extends in a second plane, wherein said first and second planes are inclined in relation to each other. The inclination of the first and second tangential support sub surfaces implies that the initial contact areas between the abutment surface on the end face of the cutting insert and the first and second tangential support sub surfaces, i.e. when the tool body is in a brand new condition, will be very small, which in its turn implies a high surface pressure on the first and second tangential support sub surfaces at the contact areas during machining of a workpiece and thereby an efficient embossing of the first and second tangential support sub surfaces at the contact areas. The first and second tangential support sub surfaces preferably have such an inclination that they are inclined towards each other with said first and second planes forming an angle of 178-179° with each other. As an alternative, the first and second tangential support sub surfaces may be substantially coplanar with each other.

Preferably, each one of said first and second tangential support sub surfaces is substantially perpendicular to the radial support surface in the same insert seat.

Said substantially planar abutment surface on each end face of said cutting insert is with advantage formed as a continuous surface but may as an alternative, when the tangential support surface in said at least one insert seat is divided into two separate tangential support sub surfaces, be divided into a first abutment sub surface and a second abutment sub surface located at a distance from each other on the associated end face and separated from each other by an intermediate surface on the associated end face.

According to another embodiment of the invention, the auxiliary support surface of the support member is planar or at least essentially planar and is inclined away from the first tangential support sub surface and inclined away from the second tangential support sub surface, wherein the auxiliary support surface extends substantially in a plane that forms an angle larger than 180° and smaller than 270°, preferably larger than 180° and smaller than or equal to 225°, more preferably 190-215°, with a plane in which the first tangential support sub surface extends and that forms an angle larger than 180° and smaller than 270°, preferably larger than 180° and smaller than or equal to 225°, more preferably 190-215°, even more preferably 200±5°, with a plane in which the second tangential support sub surface extends. In this case, the auxiliary support surface is facing tangentially forward, as seen in an intended direction of rotation of the tool body, and radially outward.

According to another embodiment of the invention, the tangential support surface, when being formed as a continuous surface, is planar and the auxiliary support surface of the support member is planar or at least essentially planar and is inclined away from the tangential support surface, wherein the auxiliary support surface extends substantially in a plane that forms an angle larger than 180° and smaller than 270°, preferably larger than 180° and smaller than or equal to 225°, more preferably 190-215°, even more preferably 200±5°, with a plane in which the tangential support surface extends. In this case, the auxiliary support surface is facing tangentially forward, as seen in an intended direction of rotation of the tool body, and radially outward.

That the auxiliary support surface is essentially planar is here intended to imply that at least a major part of the auxiliary support surface is planar, wherein a minor part of the auxiliary support surface, for instance up to 5% of the area of the auxiliary support surface, may be non-planar.

According to another embodiment of the invention, the substantially planar abutment surface on each one of the two end faces of said cutting insert is depressed in relation to at least a part of each one of the longitudinal edges of the associated end face. Thus, as seen in relation to an imaginary second median plane that extends halfway between the two end faces of the cutting insert in parallel with said abutment surface on each one of the end faces, the abutment surface on each one of the end faces is located closer to this second median plane than said part of each one of the longitudinal edges of the end face. With the solution according to the invention, it will be possible to dispense with a tricky grinding of such depressed abutment surfaces on the end faces of the cutting insert. In a cutting insert with depressed abutment surfaces on the end faces, said longitudinal edges, and thereby the primary cutting edges extending along these longitudinal edges, may be inclined in relation to said second median plane, such that a first end of each primary cutting edge is located further away from this second median plane than an opposite second end of the same primary cutting edge.

Another embodiment of the invention is characterized in:
- that each one of the two major side faces of said cutting insert is provided with a planar surface that is penetrated by the through hole in the cutting insert and that surrounds a circular rim at one of the two opposite ends of this through hole, wherein the cutting insert, when mounted in said at least one insert seat in any of its four working positions, is configured to abut against the radial support surface in the insert seat through a contact area that forms part of said planar surface on one of the two major side faces and that extends around the circular rim thereon; and
- that the radial support surface in said at least one insert seat surrounds a recess formed in the insert seat, wherein said screw hole in the insert seat has an upper rim that is received in the recess, and wherein the recess has an extent in at least one direction along the radial support surface that is larger than a diameter of the circular rim at each end of the through hole in the cutting insert such that the recess overlaps at least a part of the circular rim at the end of the through hole that faces the screw hole in the insert seat when the cutting insert is mounted in the insert seat in any of its four working positions.

Due to a more dense compacting of powder around the through hole in the cutting insert in connection with the pressing of the cutting insert as compared to the other parts of the cutting insert, there may remain small and slightly convex protuberances on each major side face in an area around and close to the rim of the through hole. A contact between this slightly uneven area on a major side face and the radial support surface in the insert seat will prevent a perfectly flat contact between the cutting insert and the radial support surface in the insert seat, which may cause some minor instability with respect to the support for the cutting insert in the insert seat. The above-mentioned recess will prevent at least some parts of said slightly uneven area from being in contact with the radial support surface in the insert seat when the cutting insert is mounted in the insert seat, which will make it possible to obtain a flatter contact between the cutting insert and the radial support surface in the insert seat and thereby avoid, or at least reduce, said instability problem. If there is sufficient space available on the radial support surface in the insert seat, the recess may be dimensioned to cover the entire circular rim at the end of the through hole that faces the screw hole in the insert seat and a circular area on the major side face around this circular rim. In the latter case, the recess may have the shape of a circle at an interface with the radial support surface in the insert seat with a centre of the circle coinciding with a centre axis of said screw hole and with a diameter of the circle being larger than the diameter of the circular rim at each end of the through hole in the cutting insert. As an alternative, the recess may have the shape of an ellipse at the interface with the radial support surface in the insert seat with a centre of the ellipse coinciding with a centre axis of said screw hole and with a major axis of the ellipse preferably extending essentially perpendicularly to the axial support surface in the insert seat.

A cutting tool according to the present invention is particularly intended to be designed as a milling tool, for instance in the form of a square-shoulder milling tool or a helical milling cutter. Such a milling tool may have a plurality of insert seats, wherein each one of the plurality of insert seats is arranged in accordance with the embodiments of the invention. However, the cutting tool according to the present invention may as an alternative be designed as a turning tool.

Further advantageous features of the cutting tool according to the present invention will appear from the description following below.

### BRIEF DESCRIPTION OF THE DRAWINGS

With reference to the appended drawings, a specific description of embodiments of the invention cited as examples follows below. In the drawings:
- Figs 1a and 1b: are perspective views from different directions of a cutting tool according to a first embodiment of the invention, as seen with a cutting insert removed from its insert seat in the tool body of the cutting tool,
- Fig 1c: is a front view of the cutting tool of Figs 1a and 1b,
- Fig 1d: is a lateral view of the cutting tool of Figs 1a and 1b,
- Fig 2: is a cut according to the line II-II in Fig 1d,
- Fig 3: is a cut according to the line III-III in Fig 1d,
- Fig 4: is a perspective view of a part of the cutting tool of Figs 1a and 1b illustrating an insert seat formed in the tool body of the cutting tool,
- Fig 5: is a lateral view of the insert seat of Fig 4,
- Fig 6: is a cut according to the line VI-VI in Fig 5,
- Fig 7: is a cut according to the line VII-VII in Fig 5,
- Figs 8a-8d: are perspective views from different directions of a double-sided tangential cutting insert included in the cutting tool of Figs 1a-1d,
- Fig 8e: is an end view from a first end of the cutting insert of Fig 8a-8d, with the positions of some specific areas on an end face of the cutting insert illustrated with dot hatch pattern,
- Fig 8f: is an end view from an opposite second end of the cutting insert of Figs 8a-8d,
- Fig 8g: is a lateral view from a major side of the cutting insert of Figs 8a-8d,
- Fig 8h: is a lateral view from a minor side of the cutting insert of Figs 8a-8d,
- Fig 8i: is a perspective view corresponding to Fig 8a, with the positions of some specific areas on an end face of the cutting insert illustrated with dot hatch pattern,
- Fig 8j: is a perspective view corresponding to Fig 8b, with the positions of some specific areas on an end face of the cutting insert illustrated with dot hatch pattern,
- Fig 8k: is a cut according to the line Vlllk-Vlllk in Fig 8g,
- Figs 9a and 9b: are perspective views from different directions of a cutting tool according to a second embodiment of the invention, as seen with a cutting insert removed from its insert seat in the tool body of the cutting tool,
- Fig 9c: is a front view of the cutting tool of Figs 9a and 9b,
- Fig 9d: is a perspective view of the cutting tool of Figs 9a and 9b,
- Fig 9e: is a lateral view of the cutting tool of Figs 9a and 9b,
- Fig 10: is a cut according to the line X-X in Fig 9d, and
- Fig 11: is a cut according to the line XI-XI in Fig 9e.

### DETAILED DESCRIPTION OF EMBODIMENTS OF THE INVENTION

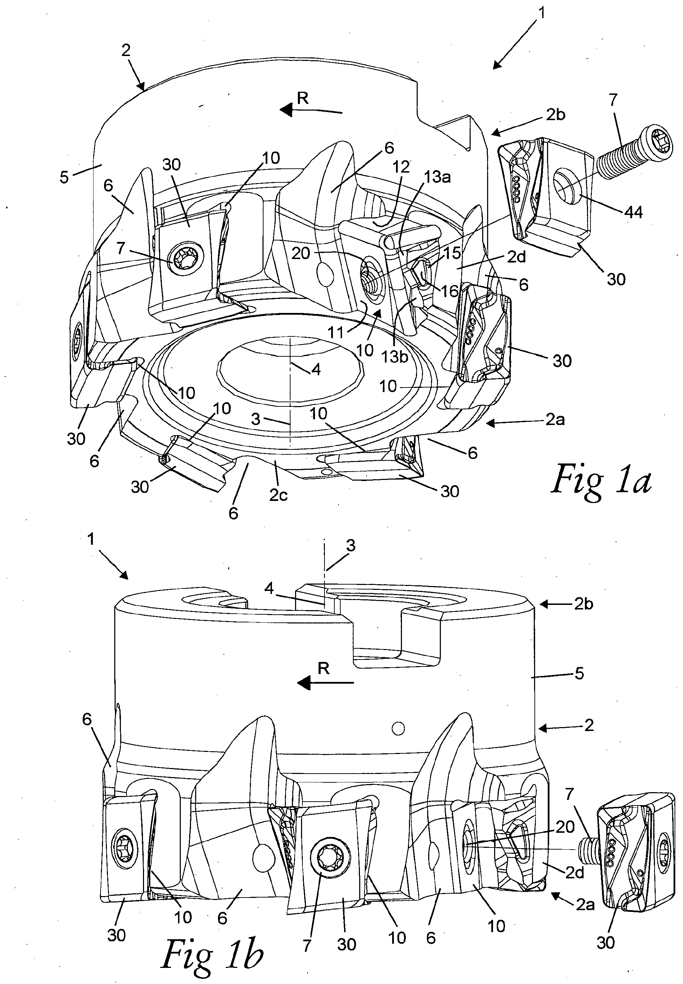

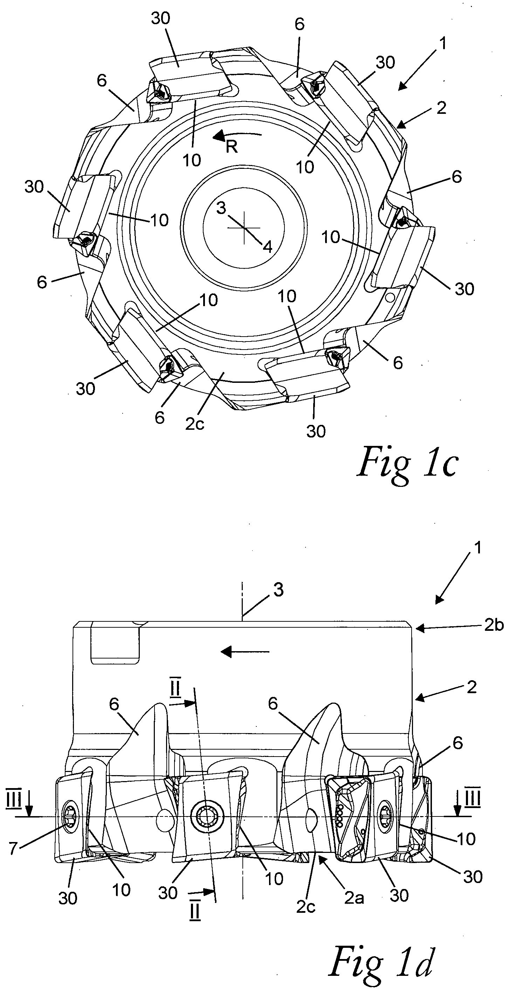

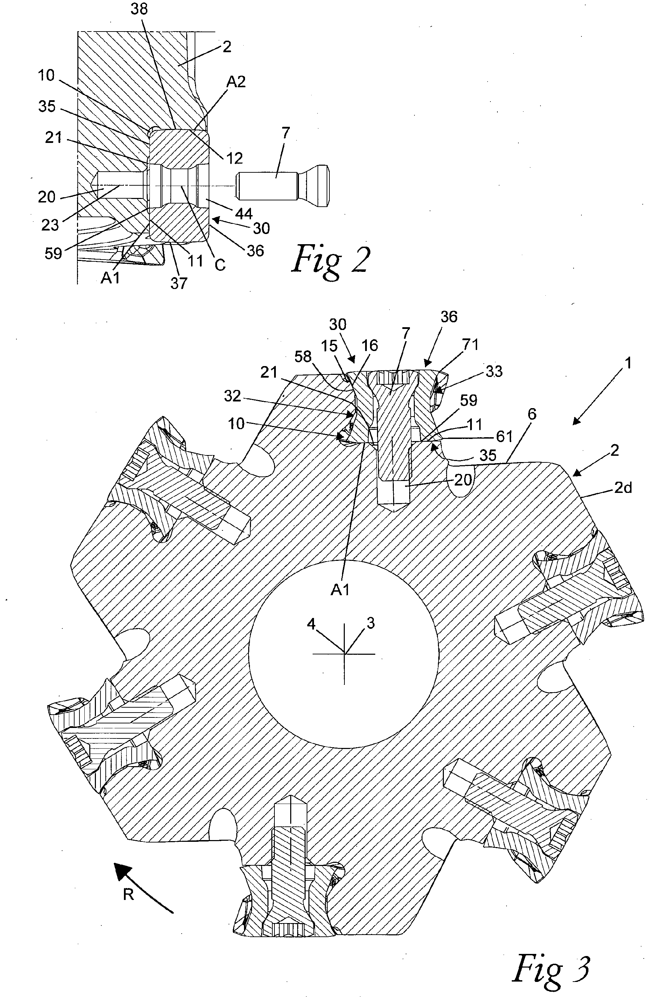

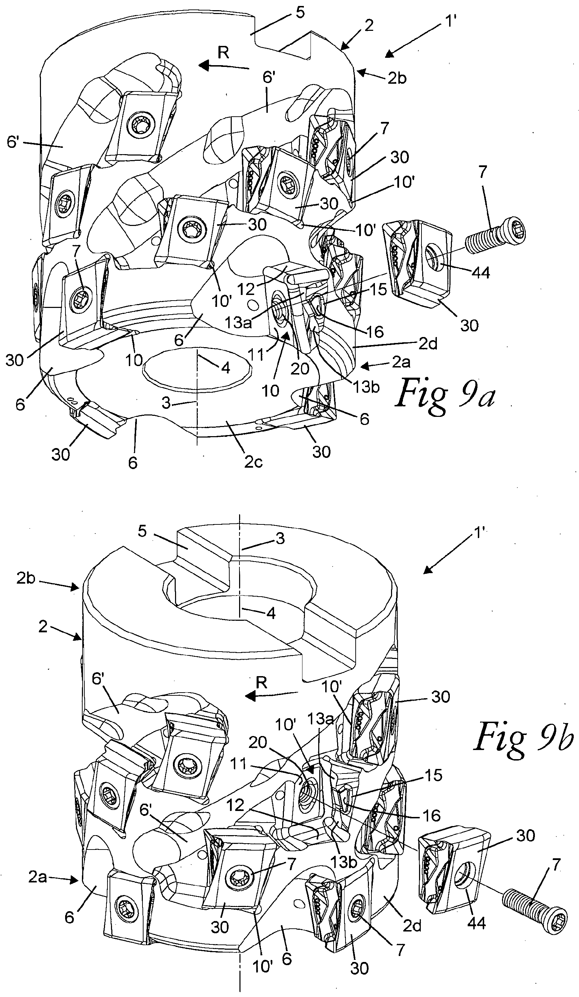

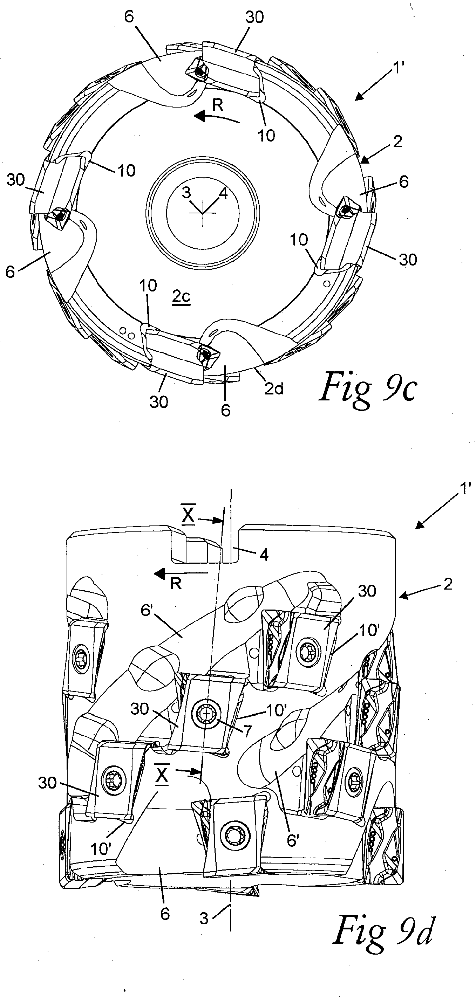

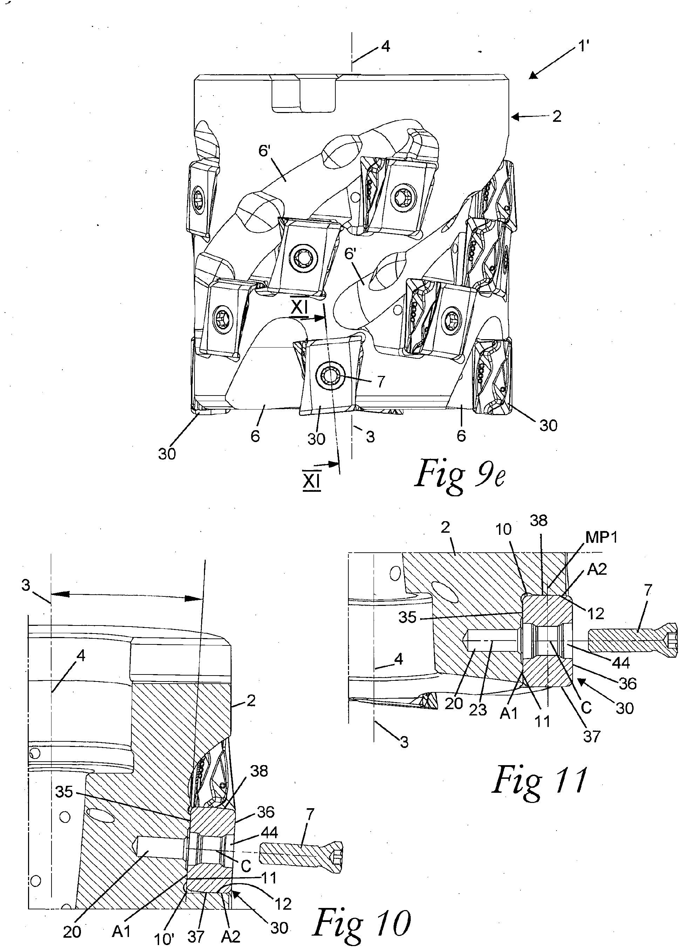

Two different embodiments of a cutting tool 1, 1' according to the present invention are illustrated in Figs 1-3 and in Figs 9-11, respectively. The cutting tool 1 illustrated in Figs 1-3 has the design of a square-shoulder milling tool and the cutting tool 1' illustrated in Figs 9-11 has the design of a helical milling cutter. Thus, the illustrated cutting tools 1, 1' constitute milling tools. However, the cutting tool of the present invention may as an alternative have the design of a turning tool.

The cutting tool 1, 1' comprises a tool body 2 and is configured to be rotated about an axis of rotation 3. The tool body 2 has a front end 2a and an opposite rear end 2b. A longitudinal centre axis 4 of the tool body 2 extends between the rear end 2b and the front end 2a of the tool body, wherein this centre axis 4 coincides with the axis of rotation 3 of the cutting tool 1, 1'. A rear part of the tool body 2 forms a connection member 5, through which the tool body 2 is mountable, directly or via an intermediate tool holder, to a rotating spindle or the similar of a machine, for instance a milling machine. At the front end 2a, the tool body 2 is provided with a front surface 2c. The tool body 2 also has a peripheral surface 2d.

The tool body 2 is provided with several insert seats 10, 10' which are evenly or at least substantially evenly distributed in the circumferential direction of the tool body 2 and configured to receive a respective cutting insert 30. Thus, the insert seats 10, 10' and also the cutting inserts 30, are evenly or at least substantially evenly distributed about the centre axis 4 of the tool body 2. Each cutting insert 30 is configured to be detachably mounted in its associated insert seat 10, 10'. A chip pocket 6 or chip flute 6' is provided in the tool body 2 in front of each insert seat 10, 10' as seen in the intended direction of rotation R of the tool body 2.

The cutting inserts 30 are made of hard and wear-resistant material, preferably cemented carbide, and the tool body 2 is preferably made of steel.

In the embodiment illustrated in Figs 1-3, the tool body 2 is provided with six insert seats 10 spaced apart in the circumferential direction of the tool body. However, the tool body 2 may as an alternative, inter alia depending on the diameter of the tool body, be provided with any other suitable number of insert seats 10. Each insert seat 10 is located at a transition between the front surface 2c and the peripheral surface 2d of the tool body 2, wherein the insert seat 10 is open towards the front surface 2c of the tool body 2 in order to allow a cutting insert 30 mounted in the insert seat 10 to project in the axial direction of the tool body 2 beyond the front end 2c thereof and also open towards the peripheral surface 2d of the tool body 2 in order to allow a cutting insert 30 mounted in the insert seat 10 to project in the radial direction of the tool body 2 beyond the peripheral surface 2d thereof.

In the embodiment illustrated in Figs 9-11, the tool body 2 has a peripheral surface 2d with an essentially circular cylindrical basic shape. Chip flutes 6' are formed in the peripheral surface 2d of the tool body 2 and extend alongside of each other along a part of the tool body 2, wherein the chip flutes 6' are separated from each other in the circumferential direction of the tool body 2. In the illustrated example, the tool body 2 is provided with four chip flutes 6', which are evenly distributed about the centre axis 4 of the tool body. However, the tool body 2 may as an alternative, inter alia depending on the diameter of the tool body, be provided with any other suitable number of chip flutes 6'. Each chip flute 6' extends in a helically curved path along the associated part of the tool body 2.

In the embodiment illustrated in Figs 9-11, the tool body 2 is provided with four first insert seats 10 spaced apart in the circumferential direction of the tool body. Each one of these first insert seats 10 is located at a transition between the front surface 2c and the peripheral surface 2d of the tool body 2, wherein each first insert seat 10 is open towards the front surface 2c of the tool body 2 in order to allow a cutting insert 30 mounted in the first insert seat 10 to project in the axial direction of the tool body 2 beyond the front end 2c thereof and also open towards the peripheral surface 2d of the tool body 2 in order to allow a cutting insert 30 mounted in the first insert seat 10 to project in the radial direction of the tool body 2 beyond the peripheral surface 2d thereof.

In the embodiment illustrated in Figs 9-11, each chip flute 6' is provided with an array of second insert seats 10' located one after the other along the chip flute 6' such that the second insert seats 10' in the same array of insert seats are spaced apart from each other in a circumferential direction of the tool body 2 in a stepped manner. Each second insert seat 10' has an end wall at a first end of the insert seat 10' that faces the front end 2a of the tool body 2 and has an opposite open second end that faces the rear end 2b of the tool body 2. Each second insert seat 10' is also open towards the peripheral surface 2d of the tool body 2 in order to allow a cutting insert 30 mounted in the second insert seat 10' to project in the radial direction of the tool body 2 beyond the peripheral surface 2d thereof.

Each one of the above-mentioned insert seats 10, 10' is configured to accommodate a double-sided tangential cutting insert 30 with four different working positions and comprises a radial support surface 11, an axial support surface 12 arranged at an angle to the radial support surface 11 and a tangential support surface 13a, 13b arranged at an angle to the radial support surface 11 and at an angle to the axial support surface 12. The radial support surface 11 and the axial support surface 12 are planar or at least substantially planar, i.e. planar within manufacturing tolerances.

In the embodiment illustrated in Figs 1-3, the radial support surface 11 of each insert seat 10 is parallel with the centre axis 4 of the tool body 2. In the embodiment illustrated in Figs 9-11, the radial support surface 11 of each first insert seat 10 is parallel with the centre axis 4 of the tool body 2, as illustrated in Fig 11, whereas the radial support surface 11 of each second insert seat 10' is slightly inclined in relation to the centre axis 4 of the tool body 2, as illustrated in Fig 10. The tangential support surface 13a, 13b extends perpendicularly to the radial support surface 11.

In the illustrated embodiments, the tangential support surface 13a, 13b of each insert seat 10, 10' is divided into a first tangential support sub surface 13a and a second tangential support sub surface 13b located at a distance from each other as seen in the axial direction of the tool body 2. However, the tangential support surface of each insert seat 10, 10' may as an alternative be formed as a continuous surface. When the tangential support surface is formed as a continuous surface, it may be planar, in which case it extends in a single plane that is perpendicularly to the radial support surface 11. However, when formed as a continuous surface, the tangential support surface may as an alternative have a concave shape or any other suitable shape.

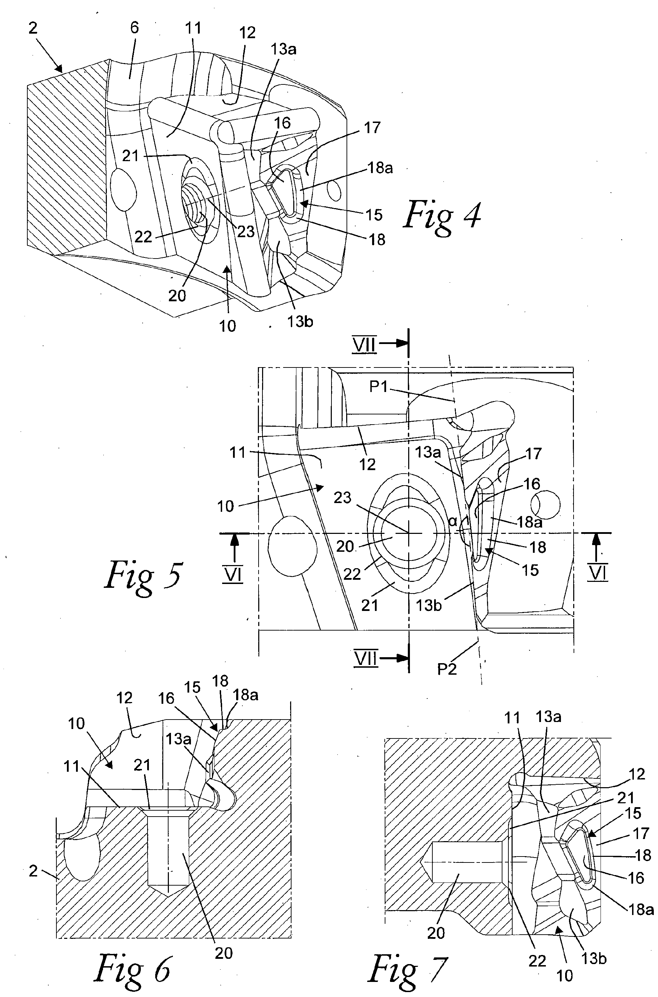

In the illustrated embodiments, the first tangential support sub surface 13a is planar and extends in a first plane P1 (see Fig 5) that is substantially perpendicular to the radial support surface 11 of the same insert seat 10, 10' and the second tangential support sub surface 13b is also planar and extends in a second plane P2 that is substantially perpendicular to the radial support surface 11 of the same insert seat 10, 10'. The first and second tangential support sub surfaces 13a, 13b of one and the same insert seat 10, 10' are preferably inclined towards each other such that said first and second planes P1, P2 form an angle α of 178-179° with each other, as illustrated in Fig 5. The first and second tangential support sub surfaces 13a, 13b of one and the same insert seat 10, 10' may as an alternative be substantially coplanar with each other. The first and second tangential support sub surfaces 13a, 13b may also have any other suitable, non-planar, shape.

A support member 15 with an auxiliary support surface 16 is formed in each insert seat 10, 10' on the same face of the insert seat as the first and second tangential support sub surfaces 13a, 13b, i.e. on a tangentially facing face of the insert seat 10, 10'. The auxiliary support surface 16 of each support member 15 faces tangentially forward in the intended direction of rotation R of the tool body 2. In the illustrated embodiments, each support member 15 is formed as a protrusion in the associated insert seat 10, 10', wherein the support member 15 protrudes from an area 17 of the insert seat that surrounds the support member 15 and wherein the auxiliary support surface 16 constitutes an upper surface on the protrusion. The support member 15 comprises a peripheral surface 18 that surrounds the auxiliary support surface 16 and forms a slope between the auxiliary support surface 16 and said area 17 of the insert seat 10, 10' that surrounds the support member 15. In the illustrated embodiments, the peripheral surface 18 of the support member 15 comprises a concave lower part 18a that extends all around the base of the support member 15, wherein the peripheral surface 18 adjoins to said surrounding area 17 on the insert seat 10, 10' through this concave lower part 18a. The auxiliary support surface 16 of each support member 15 is preferably smooth and flat, or at least substantially flat.

In the illustrated embodiments, the auxiliary support surface 16 of each support member 15 is planar, or at least essentially planar, and is inclined away from the first tangential support sub surface 13a and also inclined away from the second tangential support sub surface 13b. In this case, the auxiliary support surface 16 extends substantially in a plane that forms an angle larger than 180° and smaller than 270°, preferably larger than 180° and smaller than or equal to 225°, more preferably 190-215°, even more preferably 200±5°, with the plane P1 in which the first tangential support sub surface 13a extends and also with the plane P2 in which the second tangential support sub surface 13b extends. In this case, the auxiliary support surface 16 is facing forward in the intended direction of rotation R of the tool body 2, and also radially outward.

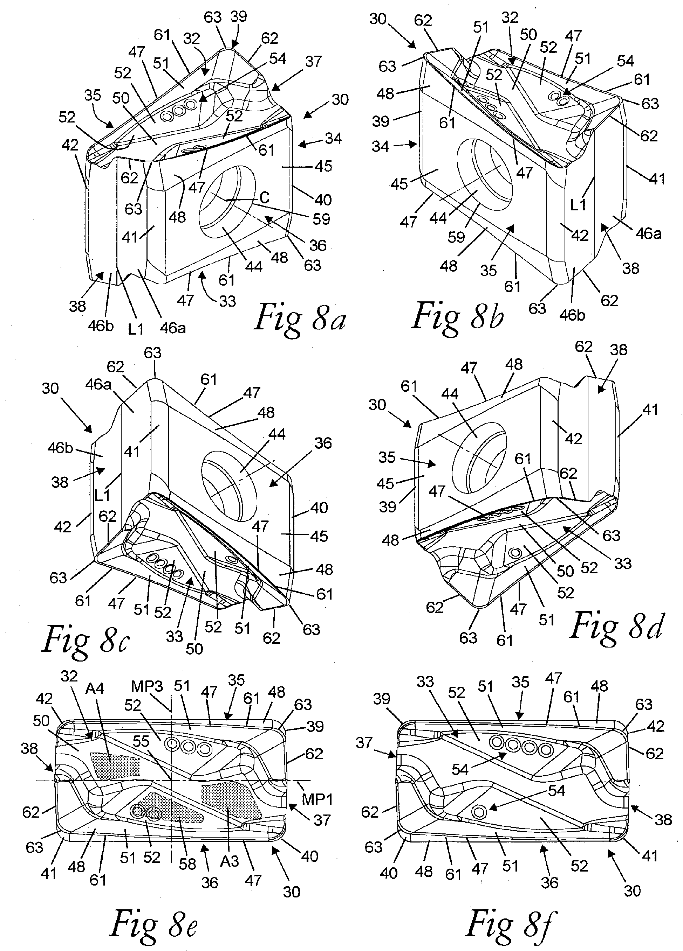

The cutting inserts 30 included in the illustrated cutting tools 1, 1' are all geometrically identical to each other, within manufacturing tolerances. Thus, the cutting inserts 30 have the same shape. The cutting inserts 30 illustrated in Figs 1-3 and in Figs 9-11 are of the type illustrated in closer detail in Figs 8a-8k but may also be designed in any other suitable manner. A cutting insert with this type of design in described in closer detail in US 2016/0167137 A1.

Each cutting insert 30 is detachably mountable in four different working positions in the associated insert seat 10, 10'. Each cutting insert 30 comprises a first end face 32 and a second end face 33 arranged opposite to each other on opposite sides of the cutting insert. The two end faces 32, 33 are configured to serve as rake faces, one at a time, and are configured to constitute leading and trailing faces of the cutting insert 30 when the cutting insert is mounted to the tool body 2 and as seen in the intended direction of rotation R of the tool body. Thus, the cutting insert 30 is configured to be mounted in an insert seat 10, 10' of the tool body 2 with one of the two end faces 32, 33 facing forward in the intended direction of rotation R of the tool body and serving as rake face and the other end face facing rearward in the intended direction of rotation R of the tool body.

A peripheral surface 34 extends around the cutting insert 30 between the two end faces 32, 33. The peripheral surface 34 comprises:
- a first major side face 35 and a second major side face 36 arranged opposite to each other on opposite sides of the cutting insert 30;
- a first minor side face 37 and a second minor side face 38 arranged between the two major side faces 35, 36, wherein the two minor side faces 37, 38 are arranged opposite to each other on opposite sides of the cutting insert 30;
- a first corner side face 39 arranged at a first corner of the peripheral surface between the first major side face 35 and the first minor side face 37;
- a second corner side face 40 arranged at a second corner of the peripheral surface between the first minor side face 37 and the second major side face 36;
- a third corner side face 41 arranged at a third corner of the peripheral surface between the second major side face 36 and the second minor side face 38; and
- a fourth corner side face 42 arranged at a fourth corner of the peripheral surface between the second minor side face 38 and the first major side face 35.

A through hole 44 extends centrally through the cutting insert 30 between the two major side faces 35, 36. The through hole 44 is configured to receive a fastening element 7 in the form of a screw, by means of which the cutting insert 30 may be releasably fixed in an insert seat 10, 10' of the tool body 2 in any of its four working positions. The fastening element 7 is configured to extend through the through hole 44 in the cutting insert 30 and to be in threaded engagement with a screw hole 20 provided in the radial support surface 11 in the insert seat 10, 10'.

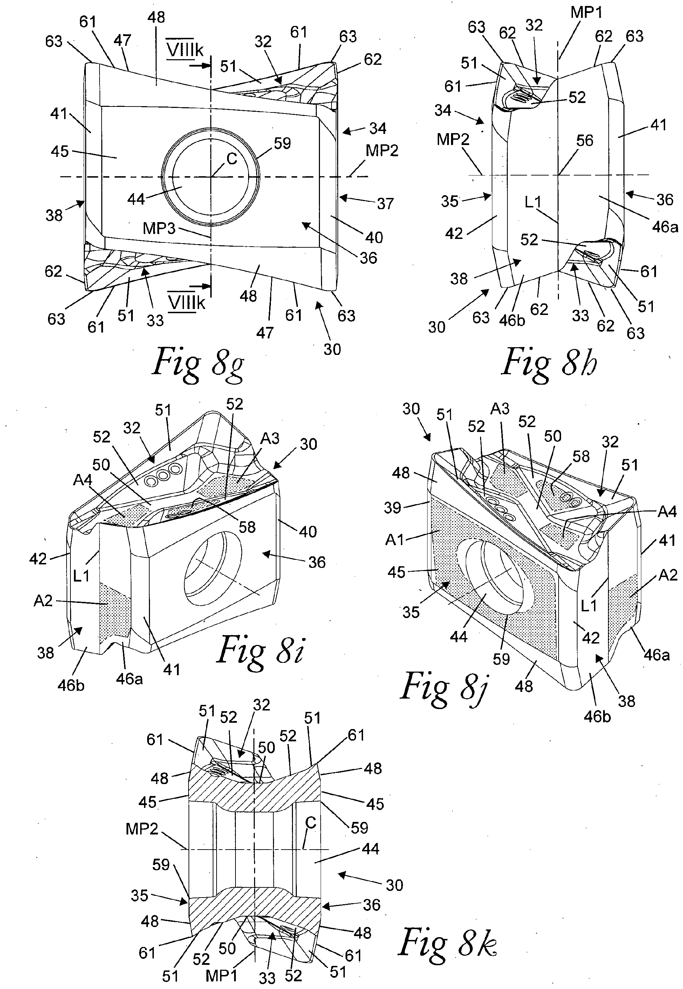

Each one of the two major side faces 35, 36 comprises a plane, or at least substantially plane, central surface 45 that is penetrated by the through hole 44, wherein the central surfaces 45 of the two major side faces 35, 36 are parallel with each other. A first median plane MP1 (see Figs 8e, 8h and 8k), which constitutes an imaginary plane, extends halfway between the two major side faces 35, 36 in parallel with said central surfaces 45 and perpendicularly to a centre axis C of the through hole 44. The first median plane MP1 intersects the first minor side face 37 along a line of intersection L1 and the second minor side face 38 along another line of intersection.

In the illustrated embodiment, the two minor side faces 37, 38 are parallel with each other as seen in cross-sectional planes through the cutting insert 1 perpendicularly to the centre axis C of the through hole 44, which implies that the minor side faces 37, 38 extend in parallel with each other between the two end faces 32, 33 as seen in every cross-sectional plane through the cutting insert 30 that is perpendicular to the centre axis C of the through hole 44 and intersects the two end faces 32, 33 and the two minor side faces 37, 38. In this case, the above-mentioned lines of intersection L1 extend in parallel with each other. In the illustrated embodiment, each one of the minor side faces 37, 38 comprises two plane, or at least substantially plane, surfaces 46a, 46b which are slightly inclined in relation to each other and meet each other along the line of intersection L1 between the minor side face 37, 38 and the first median plane MP1. However, the two minor side faces 37, 38 may as an alternative be plane, or at least substantially plane or have any other suitable shape.

Cutting edges are formed along the periphery of each one of the first and the second end face 32, 33. A first group of cutting edges are distributed along the periphery of the first end face 32 and formed at the intersection between the first end face 32 and the peripheral surface 34. A second group of cutting edges are distributed along the periphery of the second end face 33 and formed at the intersection between the second end face 33 and the peripheral surface 34.

The first group of cutting edges comprises two separate first sets of cutting edges, which correspond to a respective working position of the four available working positions of cutting insert 30. Each first set of cutting edges comprises:
- a primary cutting edge 61 extending along a longitudinal edge 47 of the first end face 32 and formed at an intersection between the first end face 32 and one of the two major side faces 35, 36;
- a secondary cutting edge 62 formed at an intersection between the first end face 32 and one of the two minor side faces 37, 38; and
- a corner cutting edge 63 formed at an intersection between the first end face 32 and one of the four corner side faces 39-42.

The primary cutting edge 61, the corner cutting edge 63 and the secondary cutting edge 62 of each one of the first sets of cutting edges are arranged one after the other with the corner cutting edge 63 located between the primary cutting edge 61 and the secondary cutting edge 63.

The second group of cutting edges comprises two separate second sets of cutting edges, which correspond to a respective working position of the four available working positions of cutting insert 30. Each second set of cutting edges comprises:
- a primary cutting edge 61 extending along a longitudinal edge 47 of the second end face 33 and formed at an intersection between the second end face 33 and one of the two major side faces 35, 36;
- a secondary cutting edge 62 formed at an intersection between the second end face 33 and one of the two minor side faces 37, 38; and
- a corner cutting edge 63 formed at an intersection between the second end face 33 and one of the four corner side faces 39-42. The primary cutting edge 61, the corner cutting edge 63 and the secondary cutting edge 62 of each one of the second sets of cutting edges are arranged one after the other with the corner cutting edge 63 located between the primary cutting edge 61 and the secondary cutting edge 62.

In the illustrated embodiment, an inclined relief surface 48 is provided on each major side face 35, 36 between the central surface 45 and each one of the primary cutting edges 61 extending along the major side face 35, 36.

Abutment surfaces 50 configured to serve as tangential abutment surfaces of the cutting insert 30 in different working positions of the cutting insert are provided on the first and the second end face 32, 33. Each abutment surface 50 is substantially planar and is located on the associated end face 32, 33 between the longitudinal edges 47 thereof. The abutment surfaces 50 on the two end faces 32, 33 are substantially parallel with each other. In the illustrated embodiment, the abutment surface 50 on each end face 32, 33 is formed as a continuous surface. However, each abutment surface 50 may as an alternative be divided into a first abutment sub surface and a second abutment sub surface located at a distance from each other on the associated end face 32, 33 and separated from each other by an intermediate surface on the associated end face.

A second median plane MP2 (see Figs 8g, 8h and 8k), which constitutes an imaginary plane, extends halfway between the two end faces 32, 33 in parallel with said abutment surfaces 50 on the end faces, wherein this second median plane MP2 contains the centre axis C of the through hole 44 and extends perpendicularly to the central surface 45 of each major side face 35, 36. A third median plane MP3 (see Figs 8e and 8g), which constitutes an imaginary plane, extends halfway between the two minor side faces 37, 38 perpendicularly to the central surface 45 of each major side face 35, 36, wherein this third median plane MP3 contains the centre axis C of the through hole 44.

In the illustrated embodiment, the abutment surface 50 on each end face 32, 33 is depressed in relation the longitudinal edges 47 of the end face 32, 33, and consequently also depressed in relation to the primary cutting edges 61 extending along these longitudinal edges 47. Thus, the abutment surface 50 on each one of the end faces 32, 33 is located closer to the second median plane MP2 than the longitudinal edges 47 of the same end face 32, 33.

In the illustrated embodiment, each primary cutting edge 61 is inclined in relation to the above-mentioned second median plane MP2, such that a first end of each primary cutting edge 61, through which the primary cutting edge 61 is connected to the corner cutting edge 63 in the same set of cutting edges, is located further away from the second median plane MP2 than an opposite second end of the same primary cutting edge, as clearly illustrated in Fig 8g.

Rake surfaces 51 are provided on each one of the first and second end faces 32, 33 between each one of the primary cutting edges 61 and the abutment surface 50. In the illustrated embodiment, an inclined and planar, or at least essentially planar, intermediate surface 52 is provided on each one of the first and second end faces 32, 33 between each rake surface 51 and the abutment surface 50. Thus, each end face 32, 33 is provided with two such intermediate surfaces 52 located on opposite sides of the abutment surface 50. The intermediate surfaces 52 provide a reinforcement for the cutting insert 30, as explained in US 2016/0167137 A1. However, the cutting insert 30 may lack this type of intermediate surfaces 52 on the end faces 32, 33, in which case the rake surfaces 51 on each end face 32, 33 may be wider and may adjoin to the abutment surface 50 located between the rake surfaces 51.

In the illustrated embodiment, each end face 32, 33 of the cutting insert 30 is provided with markings 54 in the form of recesses in order to facilitate an identification of the different working positions of the cutting insert 30. Except for the markings 54, the two end faces 32, 33 of the cutting insert have 180° rotational symmetry with each other with respect to the centre axis C of the through hole 44. Except for the markings 54, each one of the two end faces 32, 33 of the cutting insert also has 180° rotational symmetry about an axis 55 (see Fig 8e) extending along a line of intersection between the first median plane MP1 and the third median plane MP3.

In the illustrated embodiment, the two minor side faces 37, 38 of each cutting insert 30 have 180° rotational symmetry with each other with respect to the centre axis C of the through hole 44. Each one of the two minor side faces 37, 38 of the cutting insert also has 180° rotational symmetry about an axis 56 (see Fig 8h) extending along a line of intersection between the first median plane MP1 and the second median plane MP2.

In the illustrated embodiment, the two major side faces 35, 36 of each cutting insert 30 have 180° rotational symmetry with each other with respect to the axis 56 extending along the line of intersection between the first median plane MP1 and the second median plane MP2. Each one of the two major side faces 35, 36 of the cutting insert also has 180° rotational symmetry about the centre axis C of the through hole 44.

When the cutting insert 30 is mounted in one of the insert seats 10, 10' in any of its four working positions, the cutting insert 30 is configured to abut against the radial support surface 11 in the insert seat through a contact area A1 (see Fig 8j) on the central surface 45 on one of the two major side faces 35, 36, abut against the axial support surface 12 in the insert seat through a contact area A2 (see Figs 8i and 8j) on one of the above-mentioned surfaces 46a, 46b on one of the two minor side faces 37, 38 and abut against the tangential support sub surfaces 13a, 13b in the insert seat through two separate contact areas A3, A4 on the abutment surface 50 on one of the two end faces 32, 33. The contact areas A1-A4 in one of the four working positions of the cutting insert 30, when mounted in one of the insert seats 10 of the cutting tool of Figs 1-3 or in one of the first insert seats 10 of the cutting tool of Figs 9-11, are marked with dot hatch pattern in Figs 8e, 8i and 8j. When the tangential support sub surfaces 13a, 13b are inclined in relation to each other, only a very small part of each one of the areas A3 and A4 is in contact with the associated tangential support sub surface 13a, 13b when the cutting insert 30 is mounted in one of the insert seats 10.

The auxiliary support surface 16 on the support member 15 of each insert seat 10, 10' is configured to face a mating surface 58 (see Figs 8e, 8i and 8j) on the end face 32, 33 of the cutting insert 30 that faces the tangential support surface 13a, 13b in the insert seat when the cutting insert 30 is mounted in the insert seat in any of its four working positions. In the illustrated embodiments, the mating surface 58 forms part of one of the above-mentioned intermediate surfaces 52 on the end face 32, 33 presently facing the tangential support sub surfaces 13a, 13b. The mating surface 58 in one of the four working positions of the cutting insert 30, when mounted in one of the insert seats 10, 10' of the cutting tool of Figs 1-3 or Figs 9-11, is marked with dot hatch pattern in Figs 8e, 8i and 8j. The cutting insert 30 and said support member 15 are so adapted to each other that there is a play of 0.01-0.04 mm between the auxiliary support surface 16 and said mating surface 58 when the cutting insert 30 is mounted in the insert seat 10, 10' in any of its four working positions with the tool body 2 is in a brand new condition. Thus, there is initially, when the tool body 2 in a brand new condition and has still not been used for machining of workpieces, a narrow gap in the order of 0.01-0.04 mm at the interface between the auxiliary support surface 16 in any of the insert seats 10, 10' and the mating surface 58 on the cutting insert 30 mounted in the insert seat and consequently no contact between the auxiliary support surface 16 and the mating surface 58. In this situation, there is contact between the tangential support sub surfaces 13a, 13b in the insert seat 10, 10' and the abutment surface 50 on the one of the end faces 32, 33 of the cutting insert that faces the tangential support sub surfaces 13a, 13b in the insert seat. During the subsequent machining of workpieces, the tangential support sub surfaces 13a, 13b in the insert seat 10, 10' will be subjected to embossing at the interface with the corresponding abutment surface 50 on the cutting insert 30 under the effect of pressure from the cutting forces, micro-vibrations and heat, which will gradually cause a closer contact between the tangential support sub surfaces 13a, 13b in the insert seat and the corresponding abutment surface 50 on the cutting insert and finally result in contact between a part of the auxiliary support surface 16 on the support member 15 and an opposite part of the mating surface 58 on the cutting insert 30.

In the illustrated embodiment, each support member 15 is so positioned in the associated insert seat 10, 10' that said mating surface 58 on the cutting insert 30 is located on the associated end face 32, 33 at a position between the first median plane MP1 and the one of the major side faces 35, 36 of the cutting insert 30 that faces away from the radial support surface 11 in the insert seat 10, 10' when the cutting insert 30 is mounted in the insert seat in any of its four working positions. Thus, in this case, the mating surface 58 presently facing the auxiliary support surface 16 on the support member 15 is located closer to the one of the major side face 35, 36 of the cutting insert 30 that faces away from the radial support surface 11 in the insert seat 10, 10' than to the one of the major side faces 35, 36 that faces the radial support surface 11 in the insert seat 10, 10'.

The planar central surface 45 on each one of the two major side faces 35, 36 of the cutting insert 30 surrounds a circular rim 59 at one of the two opposite ends of the through hole 44 in the cutting insert 30, wherein the cutting insert 30, when mounted in one of the insert seats 10, 10' in any of its four working positions, is configured to abut against the radial support surface 11 in the insert seat through a contact area A1 that forms part of the central surface 45 on one of the two major side faces 35, 36 and that extends around the circular rim 59 on this central surface 45. In the illustrated embodiments, the radial support surface 11 in each insert seat 10, 10' surrounds a recess 21 (see Figs 4 and 5) formed in the insert seat, wherein the screw hole 20 in the insert seat 10, 10' has an upper rim 22 that is received in the recess 21. The recess 21 is formed as a depression in the radial support surface 11 and by being received in the recess 21, the upper rim 22 of the screw hole 20 is depressed in relation to the radial support surface 11. The recess 21 has an extent in at least one direction along the radial support surface 11 that is larger than the diameter of the circular rim 59 at each end of the through hole 44 in the cutting insert 30 such that the recess 21 overlaps at least a part of the circular rim 59 at the end of the through hole 44 that faces the screw hole 20 in the insert seat 10, 10' when the cutting insert 30 is mounted in the insert seat in any of its four working positions. If there is sufficient space available on the radial support surface 11, the recess 21 may be have the shape of a circle with a diameter that is larger than the diameter of said circular rim 59 and with a centre of the circle coinciding with a centre axis 23 of the screw hole 20 in the insert seat to thereby allow the recess 21 to cover the entire circular rim 59 at the end of the through hole 44 that faces the screw hole 20 in the insert seat 10, 10'. However, when such a circular recess 21 would occupy a too large area on the radial support surface 11 with respect to the achievement of a stable support between the radial support surface 11 and the corresponding contact area A1 on the cutting insert 30, the recess 21 preferably has the shape of an ellipse at the interface with the radial support surface 11 with a centre of the ellipse coinciding with the centre axis 23 of the screw hole 20 in the insert seat, as illustrated in Figs 4 and 5, wherein a major axis of the ellipse is longer than the diameter of said circular rim 59 and a minor axis of the ellipse is shorter than the diameter of said circular rim 59 to thereby allow the recess 21 to overlap two opposite sections of the circular rim 59 at the end of the through hole 44 that faces the screw hole 20 in the insert seat 10, 10'. In the illustrated example, the recess 21 is arranged with a major axis of said ellipse extending essentially perpendicularly to the axial support surface 12 in the insert seat 10.

The invention is of course not in any way restricted to the embodiments described above. On the contrary, many possibilities to modifications thereof will be apparent to a person with ordinary skill in the art without departing from the scope of the invention such as defined in the appended claims.

## Claims

1. A cutting tool comprising:
- a tool body (2) having a front end (2a) and an opposite rear end (2b), the rear end (2b) being configured for attachment to a machine;
- at least one insert seat (10, 10') provided in the tool body (2), wherein the insert seat (10, 10') is configured to accommodate a double-sided tangential cutting insert (30), the insert seat (10, 10') comprising a radial support surface (11), an axial support surface (12) arranged at an angle to the radial support surface (11) and a tangential support surface (13a, 13b) arranged at an angle to the radial support surface and at an angle to the axial support surface;
- a double-sided tangential cutting insert (30) with four different working positions releasably mountable in said at least one insert seat (10, 10'), wherein this cutting insert (30) comprises:
• two end faces (32, 33) arranged opposite to each other on opposite sides of the cutting insert (30), wherein the two end faces (32, 33) are configured to serve as rake faces, one at a time, and to constitute leading and trailing faces of the cutting insert (30) when mounted in said at least one insert seat (10, 10'), and wherein a peripheral surface (34) extends around the cutting insert (30) between the two end faces (32, 33),
• two major side faces (35, 36) included in the peripheral surface (34) and arranged opposite to each other on opposite sides of the cutting insert (30),
• two minor side faces (37, 38) included in the peripheral surface (34) and arranged opposite to each other on opposite sides of the cutting insert (30), each one of the two minor side faces (37, 38) being arranged between the two major side faces (35, 36),
• four corner side faces (39-42) included in the peripheral surface (34) and arranged at a respective corner of the peripheral surface between a major side face (35, 36) and a minor side face (37, 38),
• a through hole (44) extending through the cutting insert (30) between the two major side faces (35, 36), and
• four primary cutting edges (61), wherein two of the four primary cutting edges (61) extend along opposite longitudinal edges (47) of a first one of the two end faces (32, 33) and are formed at an intersection between this end face and a respective one of the two major side faces (35, 36), and the other two primary cutting edges of the four primary cutting edges (61) extend along opposite longitudinal edges (47) of the other one of the two end faces (32, 33) and are formed at an intersection between this end face and a respective one of the two major side faces (35, 36),
wherein each one of the two end faces (32, 33) is provided with a substantially planar abutment surface (50) that is located on the end face (32, 33) between said longitudinal edges (47) thereof, and wherein the cutting insert (30), when mounted in said at least one insert seat (10, 10') in any of its four working positions, is configured to abut against the radial support surface (11) in the insert seat through a surface on one of the two major side faces (35, 36), abut against the axial support surface (12) in the insert seat through a surface on one of the two minor side faces (37, 38) and abut against the tangential support surface (13a, 13b) in the insert seat through the abutment surface (50) on one of the two end faces (32, 33); and
- a fastening element (7) in the form of a screw associated with said cutting insert (30) and by means of which said cutting insert (30) may be releasably fixed to said at least one insert seat (10, 10') in any of its four working positions, wherein this fastening element (7) is configured to extend through the through hole (44) in said cutting insert (30) and to be in threaded engagement with a screw hole (20) in said at least one the insert seat (10, 10'),
**characterized in that** a support member (15) with an auxiliary support surface (16) is formed in said at least one insert seat (10, 10'), wherein the auxiliary support surface (16) is configured to face a mating surface (58) on the end face (32, 33) of the cutting insert (30) that faces the tangential support surface (13a, 13b) in the insert seat (10, 10') when the cutting insert (30) is mounted in the insert seat (10, 10') in any of its four working positions, and wherein the cutting insert (30) and said support member (15) are so adapted to each other that there is a play of 0.01-0.04 mm between the auxiliary support surface (16) and said mating surface (58) when the cutting insert (30) is mounted in the insert seat (10, 10') in any of its four working positions with the tool body (2) in a brand new condition.

2. A cutting tool according to claim 1, **characterized in that** the support member (15) is formed as a protrusion in said at least one insert seat (10, 10'), wherein the support member (15) protrudes from an area (17) of the insert seat (10, 10') that surrounds the support member (15) and wherein the auxiliary support surface (16) constitutes an upper surface on the protrusion.

3. A cutting tool according to claim 2, **characterized in that** the support member (15) comprises a peripheral surface (18) that surrounds the auxiliary support surface (16) and forms a slope between the auxiliary support surface (16) and said area (17) of the insert seat (10, 10') that surrounds the support member (15).

4. A cutting tool according to claim 3, **characterized in that** the peripheral surface (18) of the support member (15) comprises a concave lower part (18a), through which the peripheral surface (18) of the support member (15) adjoins to said area (17) of the insert seat (10, 10') that surrounds the support member (15).

5. A cutting tool according to any of claims 1-4, **characterized in that** the auxiliary support surface (16) is smooth.

6. A cutting tool according to any of claims 1-5, **characterized in that** the auxiliary support surface (16) is substantially flat.

7. A cutting tool according to any of claims 1-6, **characterized in:**
- **that** an imaginary first median plane (MP1) extends halfway between the two major side faces (35, 36) of said cutting insert (30) perpendicularly to a centre axis (C) of the through hole (44); and
- **that** said support member (15) is so positioned in said at least one insert seat (10, 10') that said mating surface (58) on the cutting insert (30) is located on the associated end face (32, 33) at a position between the first median plane (MP1) and the major side face (35, 36) of the cutting insert (30) that faces away from the radial support surface (11) in the insert seat (10, 10') when the cutting insert (30) is mounted in the insert seat (10, 10') in any of its four working positions.

8. A cutting tool according to any of claims 1-7, **characterized in that** the tangential support surface (13a, 13b) is divided into a first tangential support sub surface (13a) and a second tangential support sub surface (13b) located at a distance from each other as seen in an axial direction of the tool body (2).

9. A cutting tool according to claim 8, **characterized in that** the first tangential support sub surface (13a) is planar and extends in a first plane (P1) and that the second tangential support sub surface (13b) is planar and extends in a second plane (P2), wherein said first and second planes (P1, P2) are inclined in relation to each other.

10. A cutting tool according to claim 9, **characterized in that** the first and second tangential support sub surfaces (13a, 13b) are inclined towards each other, wherein said first and second planes (P1, P2) form an angle (α) of 178-179° with each other.

11. A cutting tool according to claim 8, **characterized in that** the first and second tangential support sub surfaces (13a, 13b) are substantially coplanar with each other.

12. A cutting tool according to any of claims 8-11, **characterized in that** each one of said first and second tangential support sub surfaces (13a, 13b) is substantially perpendicular to the radial support surface (11).

13. A cutting tool according to any of claims 8-12, **characterized in that** each one of said substantially planar abutment surfaces (50) of said cutting insert (30) is divided into a first abutment sub surface and a second abutment sub surface located at a distance from each other on the associated end face (32, 33) and separated from each other by an intermediate surface on the associated end face.

14. A cutting tool according to any of claims 8-13, **characterized in that** the auxiliary support surface (16) of the support member (15) is planar or at least essentially planar and is inclined away from the first tangential support sub surface (13a) and inclined away from the second tangential support sub surface (13b), wherein the auxiliary support surface (16) extends substantially in a plane that forms an angle larger than 180° and smaller than 270°, preferably larger than 180° and smaller than or equal to 225°, more preferably 190-215°, with a plane (P1) in which the first tangential support sub surface (13a) extends and that forms an angle larger than 180° and smaller than 270°, preferably larger than 180° and smaller than or equal to 225°, more preferably 190-215°, with a plane (P2) in which the second tangential support sub surface (13b) extends.

15. A cutting tool according to any of claims 1-7, **characterized in that** the tangential support surface is planar and that the auxiliary support surface (16) of the support member (15) is planar or at least essentially planar and is inclined away from the tangential support surface, wherein the auxiliary support surface (16) extends substantially in a plane that forms an angle larger than 180° and smaller than 270°, preferably larger than 180° and smaller than or equal to 225°, more preferably 190-215°, with a plane in which the tangential support surface extends.

16. A cutting tool according to any of claims 1-15, **characterized in that** each one of said substantially planar abutment surfaces (50) of said cutting insert (30) is depressed in relation to at least a part of each one of the longitudinal edges (47) of the associated end face (32, 33).

17. A cutting tool according to any of claims 1-16, **characterized in:**
- **that** each one of the two major side faces (35, 36) of said cutting insert (30) is provided with a planar surface (45) that is penetrated by the through hole (44) in the cutting insert and that surrounds a circular rim (59) at one of the two opposite ends of this through hole (44), wherein the cutting insert (30), when mounted in said at least one insert seat (10, 10') in any of its four working positions, is configured to abut against the radial support surface (11) in the insert seat through a contact area (A1) that forms part of said planar surface (45) on one of the two major side faces (35, 36) and that extends around the circular rim (59) thereon; and
- **that** the radial support surface (11) in said at least one insert seat (10, 10') surrounds a recess (21) formed in the insert seat (10, 10'), wherein said screw hole (20) in the insert seat (10, 10') has an upper rim (22) that is received in the recess (21), and wherein the recess (21) has an extent in at least one direction along the radial support surface (11) that is larger than a diameter of the circular rim (59) at each end of the through hole (44) in the cutting insert (30) such that the recess (21) overlaps at least a part of the circular rim (59) at the end of the through hole (44) that faces the screw hole (20) in the insert seat (10, 10') when the cutting insert (30) is mounted in the insert seat (10, 10') in any of its four working positions.

18. A cutting tool according to claim 17, **characterized in that** said recess (21) has the shape of an ellipse at an interface with the radial support surface (11) in said at least one insert seat (10, 10') with a centre of the ellipse coinciding with a centre axis (23) of said screw hole (20).

19. A cutting tool according to claim 18, **characterized in that** said recess (21) is arranged with a major axis of said ellipse extending essentially perpendicularly to the axial support surface (12) in the insert seat (10, 10').

20. A cutting tool according to any of claims 1-19, **characterized in that** the cutting tool (1, 1') is a milling tool.

## Patentansprüche

1. Schneidwerkzeug, umfassend:
- einen Werkzeugkörper (2) mit einem vorderen Ende (2a) und einem gegenüberliegenden hinteren Ende (2b), wobei das hintere Ende (2b) zur Befestigung an einer Maschine ausgestaltet ist;
- mindestens einen Plattensitz (10, 10'), der in dem Werkzeugkörper (2) vorgesehen ist, wobei der Plattensitz (10, 10') zur Aufnahme eines doppelseitigen tangentialen Schneideinsatzes (30) ausgestaltet ist, wobei der Plattensitz (10, 10') eine radiale Stützfläche (11), eine axiale Stützfläche (12), die in einem Winkel zu der radialen Stützfläche (11) angeordnet ist, und eine tangentiale Stützfläche (13a, 13b), die in einem Winkel zu der radialen Stützfläche und in einem Winkel zu der axialen Stützfläche angeordnet ist, umfasst;
- einen doppelseitigen tangentialen Schneideinsatz (30) mit vier unterschiedlichen Arbeitsstellungen, der lösbar in dem mindestens einen Plattensitz (10, 10') montierbar ist, wobei dieser Schneideinsatz (30) umfasst:
• zwei Stirnflächen (32, 33), die einander gegenüberliegend an gegenüberliegenden Seiten des Schneideinsatzes (30) angeordnet sind, wobei die beiden Stirnflächen (32, 33) dazu ausgestaltet sind, jeweils einzeln als Spanfläche zu dienen und vorlaufende und nachlaufende Flächen des Schneideinsatzes (30) zu bilden, wenn dieser in dem mindestens einen Plattensitz (10, 10') montiert ist, und wobei sich eine Umfangsfläche (34) um den Schneideinsatz (30) zwischen den beiden Stirnflächen (32, 33) erstreckt,
• zwei Hauptseitenflächen (35, 36), die in der Umfangsfläche (34) enthalten und einander gegenüberliegend an gegenüberliegenden Seiten des Schneideinsatzes (30) angeordnet sind,
• zwei Nebenseitenflächen (37, 38), die in der Umfangsfläche (34) enthalten und einander gegenüberliegend an gegenüberliegenden Seiten des Schneideinsatzes (30) angeordnet sind, wobei jede der beiden Nebenseitenflächen (37, 38) zwischen den beiden Hauptseitenflächen (35, 36) angeordnet ist,
• vier Eckseitenflächen (39-42), die in der Umfangsfläche (34) enthalten und jeweils an einer entsprechenden Ecke der Umfangsfläche zwischen einer Hauptseitenfläche (35, 36) und einer Nebenseitenfläche (37, 38) angeordnet sind,
• ein Durchgangsloch (44), das sich durch den Schneideinsatz (30) zwischen den beiden Hauptseitenflächen (35, 36) erstreckt, und
• vier Hauptschneidkanten (61), wobei sich zwei der vier Hauptschneidkanten (61) entlang gegenüberliegender Längskanten (47) einer ersten der beiden Stirnflächen (32, 33) erstrecken und an einem Schnitt zwischen dieser Stirnfläche und einer jeweiligen der beiden Hauptseitenflächen (35, 36) gebildet sind, und sich die anderen zwei Hauptschneidkanten der vier Hauptschneidkanten (61) entlang gegenüberliegender Längskanten (47) der anderen der beiden Stirnflächen (32, 33) erstrecken und an einem Schnitt zwischen dieser Stirnfläche und einer jeweiligen der beiden Hauptseitenflächen (35, 36) gebildet sind,
wobei jede der beiden Stirnflächen (32, 33) mit einer im Wesentlichen ebenen Anlagefläche (50) versehen ist, die auf der Stirnfläche (32, 33) zwischen den Längskanten (47) derselben angeordnet ist, und wobei der Schneideinsatz (30), wenn er in dem mindestens einen Plattensitz (10, 10') in einer beliebigen seiner vier Arbeitsstellungen montiert ist, dazu ausgestaltet ist, an der radialen Stützfläche (11) in dem Plattensitz mittels einer Fläche an einer der beiden Hauptseitenflächen (35, 36) anzuliegen, an der axialen Stützfläche (12) in dem Plattensitz mittels einer Fläche an einer der beiden Nebenseitenflächen (37, 38) anzuliegen und an der tangentialen Stützfläche (13a, 13b) in dem Plattensitz mittels der Anlagefläche (50) an einer der beiden Stirnflächen (32, 33) anzuliegen; und
- ein Befestigungselement (7) in Form einer Schraube, das dem Schneideinsatz (30) zugeordnet ist und mittels dessen der Schneideinsatz (30) lösbar an dem mindestens einen Plattensitz (10, 10') in einer beliebigen seiner vier Arbeitsstellungen befestigt werden kann, wobei dieses Befestigungselement (7) dazu ausgestaltet ist, sich durch das Durchgangsloch (44) in dem Schneideinsatz (30) zu erstrecken und in Gewindeeingriff mit einem Schraubenloch (20) in dem mindestens einen dem Plattensitz (10, 10') zu stehen,
- **dadurch gekennzeichnet, dass** ein Stützelement (15) mit einer Hilfsstützfläche (16) in dem mindestens einen Plattensitz (10, 10') ausgebildet ist, wobei die Hilfsstützfläche (16) dazu ausgestaltet ist, einer Gegenfläche (58) an der Stirnfläche (32, 33) des Schneideinsatzes (30) gegenüberzuliegen, die der tangentialen Stützfläche (13a, 13b) in dem Plattensitz (10, 10') zugewandt ist, wenn der Schneideinsatz (30) in dem Plattensitz (10, 10') in einer beliebigen seiner vier Arbeitsstellungen montiert ist, und wobei der Schneideinsatz (30) und das Stützelement (15) derart aneinander angepasst sind, dass zwischen der Hilfsstützfläche (16) und der Gegenfläche (58) ein Spiel von 0,01-0,04 mm vorhanden ist, wenn der Schneideinsatz (30) in dem Plattensitz (10, 10') in einer beliebigen seiner vier Arbeitsstellungen montiert ist, wobei sich der Werkzeugkörper (2) in einem fabrikneuen Zustand befindet.

2. Schneidwerkzeug nach Anspruch 1, **dadurch gekennzeichnet, dass** das Stützelement (15) als ein Vorsprung in dem mindestens einen Plattensitz (10, 10') ausgebildet ist, wobei das Stützelement (15) aus einem Bereich (17) des Plattensitzes (10, 10') vorsteht, der das Stützelement (15) umgibt, und wobei die Hilfsstützfläche (16) eine obere Fläche an dem Vorsprung bildet.

3. Schneidwerkzeug nach Anspruch 2, **dadurch gekennzeichnet, dass** das Stützelement (15) eine Umfangsfläche (18) umfasst, die die Hilfsstützfläche (16) umgibt und eine Schräge zwischen der Hilfsstützfläche (16) und dem Bereich (17) des Plattensitzes (10, 10'), der das Stützelement (15) umgibt, bildet.

4. Schneidwerkzeug nach Anspruch 3, **dadurch gekennzeichnet, dass** die Umfangsfläche (18) des Stützelements (15) einen konkaven unteren Teil (18a) umfasst, über den die Umfangsfläche (18) des Stützelements (15) an den Bereich (17) des Plattensitzes (10, 10'), der das Stützelement (15) umgibt, angrenzt.

5. Schneidwerkzeug nach einem der Ansprüche 1-4, **dadurch gekennzeichnet, dass** die Hilfsstützfläche (16) glatt ist.

6. Schneidwerkzeug nach einem der Ansprüche 1-5, **dadurch gekennzeichnet, dass** die Hilfsstützfläche (16) im Wesentlichen eben ist.

7. Schneidwerkzeug nach einem der Ansprüche 1-6, **dadurch gekennzeichnet:**
- **dass** sich eine gedachte erste Mittelebene (MP1) auf halbem Weg zwischen den beiden Hauptseitenflächen (35, 36) des Schneideinsatzes (30) senkrecht zu einer Mittelachse (C) des Durchgangslochs (44) erstreckt; und
- **dass** das Stützelement (15) in dem mindestens einen Plattensitz (10, 10') derart positioniert ist, dass die Gegenfläche (58) an dem Schneideinsatz (30) auf der zugehörigen Stirnfläche (32, 33) an einer Position zwischen der ersten Mittelebene (MP1) und der Hauptseitenfläche (35, 36) des Schneideinsatzes (30), die von der radialen Stützfläche (11) in dem Plattensitz (10, 10') wegweist, angeordnet ist, wenn der Schneideinsatz (30) in dem Plattensitz (10, 10') in einer beliebigen seiner vier Arbeitsstellungen montiert ist.

8. Schneidwerkzeug nach einem der Ansprüche 1-7, **dadurch gekennzeichnet, dass** die tangentiale Stützfläche (13a, 13b) in eine erste tangentiale Stützteilfläche (13a) und eine zweite tangentiale Stützteilfläche (13b) unterteilt ist, die, in einer axialen Richtung des Werkzeugkörpers (2) betrachtet, in einem Abstand voneinander angeordnet sind.

9. Schneidwerkzeug nach Anspruch 8, **dadurch gekennzeichnet, dass** die erste tangentiale Stützteilfläche (13a) eben ist und sich in einer ersten Ebene (P1) erstreckt und dass die zweite tangentiale Stützteilfläche (13b) eben ist und sich in einer zweiten Ebene (P2) erstreckt, wobei die erste und zweite Ebene (P1, P2) zueinander geneigt sind.

10. Schneidwerkzeug nach Anspruch 9, **dadurch gekennzeichnet, dass** die erste und die zweite tangentiale Stützteilfläche (13a, 13b) aufeinander zu geneigt sind, wobei die erste und zweite Ebene (P1 , P2) miteinander einen Winkel (α) von 178-179° bilden.

11. Schneidwerkzeug nach Anspruch 8, **dadurch gekennzeichnet, dass** die erste und die zweite tangentiale Stützteilfläche (13a, 13b) im Wesentlichen zueinander koplanar sind.

12. Schneidwerkzeug nach einem der Ansprüche 8-11, **dadurch gekennzeichnet, dass** jede der ersten und zweiten tangentialen Stützteilflächen (13a, 13b) im Wesentlichen senkrecht zu der radialen Stützfläche (11) ist.

13. Schneidwerkzeug nach einem der Ansprüche 8-12, **dadurch gekennzeichnet, dass** jede der im Wesentlichen ebenen Anlageflächen (50) des Schneideinsatzes (30) in eine erste Anlageteilfläche und eine zweite Anlageteilfläche unterteilt ist, die auf der zugehörigen Stirnfläche (32, 33) in einem Abstand voneinander angeordnet und durch eine Zwischenfläche auf der zugehörigen Stirnfläche voneinander getrennt sind.

14. Schneidwerkzeug nach einem der Ansprüche 8-13, **dadurch gekennzeichnet, dass** die Hilfsstützfläche (16) des Stützelements (15) eben oder zumindest im Wesentlichen eben ist und von der ersten tangentialen Stützteilfläche (13a) weg geneigt und von der zweiten tangentialen Stützteilfläche (13b) weg geneigt ist, wobei sich die Hilfsstützfläche (16) im Wesentlichen in einer Ebene erstreckt, die mit einer Ebene (P1), in der sich die erste tangentiale Stützteilfläche (13a) erstreckt, einen Winkel größer als 180° und kleiner als 270°, vorzugsweise größer als 180° und kleiner als oder gleich 225°, besonders bevorzugt 190-215°, bildet und die mit einer Ebene (P2), in der sich die zweite tangentiale Stützteilfläche (13b) erstreckt, einen Winkel größer als 180° und kleiner als 270°, vorzugsweise größer als 180° und kleiner als oder gleich 225°, besonders bevorzugt 190-215°, bildet.

15. Schneidwerkzeug nach einem der Ansprüche 1-7, **dadurch gekennzeichnet, dass** die tangentiale Stützfläche eben ist und dass die Hilfsstützfläche (16) des Stützelements (15) eben oder zumindest im Wesentlichen eben ist und von der tangentialen Stützfläche weg geneigt ist, wobei sich die Hilfsstützfläche (16) im Wesentlichen in einer Ebene erstreckt, die mit einer Ebene, in der sich die tangentiale Stützfläche erstreckt, einen Winkel größer als 180° und kleiner als 270°, vorzugsweise größer als 180° und kleiner als oder gleich 225°, besonders bevorzugt 190-215°, bildet.

16. Schneidwerkzeug nach einem der Ansprüche 1-15, **dadurch gekennzeichnet, dass** jede der im Wesentlichen ebenen Anlageflächen (50) des Schneideinsatzes (30) gegenüber mindestens einem Teil jeder der Längskanten (47) der zugehörigen Stirnfläche (32, 33) vertieft ist.

17. Schneidwerkzeug nach einem der Ansprüche 1-16, **dadurch gekennzeichnet:**
- **dass** jede der beiden Hauptseitenflächen (35, 36) des Schneideinsatzes (30) mit einer ebenen Fläche (45) versehen ist, die von dem Durchgangsloch (44) in dem Schneideinsatz durchsetzt wird und die einen kreisförmigen Rand (59) an einem der beiden gegenüberliegenden Enden dieses Durchgangslochs (44) umgibt, wobei der Schneideinsatz (30), 20 wenn er in dem mindestens einen Plattensitz (10, 10') in einer beliebigen seiner vier Arbeitsstellungen montiert ist, dazu ausgestaltet ist, an der radialen Stützfläche (11) in dem Plattensitz mittels eines Kontaktbereichs (A1), der einen Teil der ebenen Fläche (45) an einer der beiden Hauptseitenflächen (35, 36) bildet und sich dort um den kreisförmigen Rand (59) erstreckt, anzuliegen; und
- **dass** die radiale Stützfläche (11) in dem mindestens einen Plattensitz (10, 10') eine Ausnehmung (21) umgibt, die in dem Plattensitz (10, 10') ausgebildet ist, wobei das Schraubenloch (20) in dem Plattensitz (10, 10') einen oberen Rand (22) aufweist, der in der Ausnehmung (21) aufgenommen ist, und wobei die Ausnehmung (21) in mindestens einer Richtung entlang der radialen Stützfläche (11) eine Erstreckung aufweist, die größer als ein Durchmesser des kreisförmigen Randes (59) an jedem Ende des Durchgangslochs (44) in dem Schneideinsatz (30) ist, derart, dass die Ausnehmung (21) zumindest einen Teil des kreisförmigen Randes (59) an dem Ende des Durchgangslochs (44), das dem Schraubenloch (20) in dem Plattensitz (10, 10') zugewandt ist, überlappt, wenn der Schneideinsatz (30) in dem Plattensitz (10, 10') in einer beliebigen seiner vier Arbeitsstellungen montiert ist.

18. Schneidwerkzeug nach Anspruch 17, **dadurch gekennzeichnet, dass** die Ausnehmung (21) an einer Grenzfläche mit der radialen Stützfläche (11) in dem mindestens einen Plattensitz (10, 10') die Form einer Ellipse aufweist, wobei ein Mittelpunkt der Ellipse mit einer Mittelachse (23) des Schraubenlochs (20) zusammenfällt.

19. Schneidwerkzeug nach Anspruch 18, **dadurch gekennzeichnet, dass** die Ausnehmung (21) derart angeordnet ist, dass sich eine Hauptachse der Ellipse im Wesentlichen senkrecht zu der axialen Stützfläche (12) in dem Plattensitz (10, 10') erstreckt.

20. Schneidwerkzeug nach einem der Ansprüche 1-19, **dadurch gekennzeichnet, dass** das Schneidwerkzeug (1, 1') ein Fräswerkzeug ist.

## Revendications

1. Outil de coupe comprenant :
- un corps d'outil (2) ayant une extrémité avant (2a) et une extrémité arrière opposée (2b), l'extrémité arrière (2b) étant configurée pour être fixée à une machine ;
- au moins un logement d'insert (10, 10') prévu dans le corps d'outil (2), lequel logement d'insert (10, 10') étant configuré pour recevoir une plaquette de coupe tangentielle double face (30), le logement d'insert (10, 10') comprenant une surface d'appui radiale (11), une surface d'appui axiale (12) qui est disposée à un angle par rapport à la surface d'appui radiale (11) et une surface d'appui tangentielle (13a, 13b) qui est disposée à un angle par rapport à la surface d'appui radiale et à un angle par rapport à la surface d'appui axiale ;
- une plaquette de coupe tangentielle double face (30) présentant quatre différentes positions de travail, montable de manière amovible dans ledit au moins un logement d'insert (10, 10'), laquelle plaquette de coupe (30) comprend :
• deux faces d'extrémité (32, 33) disposées l'une en face de l'autre sur des côtés opposés de la plaquette de coupe (30), les deux faces d'extrémité (32, 33) étant configurées pour servir de faces de coupe, une à la fois, et pour constituer les faces avant et arrière de la plaquette de coupe (30) lorsqu'elle est montée dans ledit au moins un logement d'insert (10, 10'), et une surface périphérique (34) s'étendant autour de la plaquette de coupe (30) entre les deux faces d'extrémité (32, 33),
• deux grandes faces latérales (35, 36) faisant partie de la surface périphérique (34) et disposées l'une en face de l'autre sur des côtés opposés de la plaquette de coupe (30),
• deux petites faces latérales (37, 38) faisant partie de la surface périphérique (34) et disposées l'une en face de l'autre sur des côtés opposés de la plaquette de coupe (30), chacune des deux petites faces latérales (37, 38) étant disposée entre les deux grandes faces latérales (35, 36),
• quatre faces latérales d'angle (39-42) faisant partie de la surface périphérique (34) et disposées à un angle respectif de la surface périphérique entre une grande face latérale (35, 36) et une petite face latérale (37, 38),
• un trou traversant (44) s'étendant à travers la plaquette de coupe (30) entre les deux grandes faces latérales (35, 36), et
• quatre arêtes de coupe principales (61), dont deux des quatre arêtes de coupe principales (61) s'étendent le long des arêtes longitudinales opposées (47) de l'une des deux faces d'extrémité (32, 33) et sont formées à l'intersection entre cette face d'extrémité et une des deux grandes faces latérales (35, 36), et les deux autres arêtes de coupe principales des quatre arêtes de coupe principales (61) s'étendent le long des arêtes longitudinales opposées (47) de l'autre des deux faces d'extrémité (32, 33) et sont formées à l'intersection entre cette face d'extrémité et une des deux grandes faces latérales (35, 36),
où chacune des deux faces d'extrémité (32, 33) est pourvue d'une surface d'appui sensiblement plane (50) qui est située sur la face d'extrémité (32, 33) entre lesdites arêtes longitudinales (47) de celle-ci, et où la plaquette de coupe (30), lorsqu'elle est montée dans ledit au moins un logement d'insert (10, 10') dans l'une quelconque de ses quatre positions de travail, est configurée pour venir en appui contre la surface d'appui radiale (11) dans le logement d'insert par l'intermédiaire d'une surface sur l'une des deux grandes faces latérales (35, 36), venir en appui contre la surface d'appui axiale (12) dans le logement d'insert par l'intermédiaire d'une surface sur l'une des deux petites faces latérales (37, 38) et venir en appui contre la surface d'appui tangentielle (13a, 13b) dans le logement d'insert par l'intermédiaire de la surface d'appui (50) sur l'une des deux faces d'extrémité (32, 33) ; et
- un élément de fixation (7) sous la forme d'une vis associé à ladite plaquette de coupe (30) et au moyen duquel ladite plaquette de coupe (30) peut être fixée de manière amovible audit au moins un logement d'insert (10, 10') dans l'une quelconque de ses quatre positions de travail, lequel élément de fixation (7) est configuré pour s'étendre à travers le trou traversant (44) dans ladite plaquette de coupe (30) et pour être en prise filetée avec un trou de vis (20) dans ledit au moins un logement d'insert (10, 10'),
**caractérisé en ce qu'**un élément de support (15) avec une surface d'appui auxiliaire (16) est formé dans ledit au moins un logement d'insert (10, 10'), dans lequel la surface d'appui auxiliaire (16) est configurée pour faire face à une surface d'accouplement (58) sur la face d'extrémité (32,33) de la plaquette de coupe (30) qui fait face à la surface d'appui tangentielle (13a, 13b) dans le logement d'insert (10, 10') lorsque la plaquette de coupe (30) est montée dans le logement d'insert (10, 10') dans l'une quelconque de ses quatre positions de travail, et dans lequel la plaquette de coupe (30) et ledit élément de support (15) sont adaptés l'un à l'autre de telle sorte qu'il existe un jeu de 0,01 à 0,04 mm entre la surface d'appui auxiliaire (16) et ladite surface d'accouplement (58) lorsque la plaquette de coupe (30) est montée dans le logement d'insert (10, 10') dans l'une quelconque de ses quatre positions de travail avec le corps d'outil (2) à l'état neuf.

2. Outil de coupe selon la revendication 1, **caractérisé en ce que** l'élément de support (15) est formé comme une saillie dans ledit au moins un logement d'insert (10, 10'), dans lequel l'élément de support (15) fait saillie à partir d'une zone (17) du logement d'insert (10, 10') qui entoure l'élément de support (15) et dans lequel la surface d'appui auxiliaire (16) constitue une surface supérieure sur la saillie.

3. Outil de coupe selon la revendication 2, **caractérisé en ce que** l'élément de support (15) comprend une surface périphérique (18) qui entoure la surface d'appui auxiliaire (16) et forme une pente entre la surface d'appui auxiliaire (16) et ladite zone (17) du logement d'insert (10, 10') qui entoure l'élément de support (15).

4. Outil de coupe selon la revendication 3, **caractérisé en ce que** la surface périphérique (18) de l'élément de support (15) comprend une partie inférieure concave (18a), par laquelle la surface périphérique (18) de l'élément de support (15) rejoint ladite zone (17) du logement d'insert (10, 10') qui entoure l'élément de support (15).

5. Outil de coupe selon l'une quelconque des revendications 1 à 4, **caractérisé en ce que** la surface d'appui auxiliaire (16) est lisse.

6. Outil de coupe selon l'une quelconque des revendications 1 à 5, **caractérisé en ce que** la surface d'appui auxiliaire (16) est sensiblement plane.

7. Outil de coupe selon l'une quelconque des revendications 1 à 6, **caractérisé en ce:**
- **qu'**un premier plan médian imaginaire (MP1) s'étend à mi-chemin entre les deux grandes faces latérales (35, 36) de ladite plaquette de coupe (30) perpendiculairement à un axe central (C) du trou traversant (44) ; et
- **que** ledit élément de support (15) est positionné dans ledit au moins un logement d'insert (10, 10') de telle sorte que ladite surface d'accouplement (58) sur la plaquette de coupe (30) est située sur la face d'extrémité associée (32, 33) à une position entre le premier plan médian (MP1) et la grande face latérale (35, 36) de la plaquette de coupe (30) qui fait face à l'opposé de la surface d'appui radiale (11) dans le logement d'insert (10, 10') lorsque la plaquette de coupe (30) est montée dans le logement d'insert (10, 10') dans l'une quelconque de ses quatre positions de travail.

8. Outil de coupe selon l'une quelconque des revendications 1 à 7, **caractérisé en ce que** la surface d'appui tangentielle (13a, 13b) est divisée en une première sous-surface d'appui tangentielle (13a) et une seconde sous-surface d'appui tangentielle (13b) situées à une distance l'une de l'autre en direction axiale du corps d'outil (2).

9. Outil de coupe selon la revendication 8, **caractérisé en ce que** la première sous-surface d'appui tangentielle (13a) est plane et s'étend dans un premier plan (P1) et que la seconde sous-surface d'appui tangentielle (13b) est plane et s'étend dans un second plan (P2), lesquels premier et second plans (P1, P2) sont inclinés l'un par rapport à l'autre.

10. Outil de coupe selon la revendication 9, **caractérisé en ce que** les première et seconde sous-surfaces d'appui tangentielle (13a, 13b) sont inclinées l'une vers l'autre, lesquels premier et second plans (P1, P2) forment un angle (α) de 178 à 179° l'un avec l'autre.

11. Outil de coupe selon la revendication 8, **caractérisé en ce que** les première et seconde sous-surfaces d'appui tangentielle (13a, 13b) sont sensiblement coplanaires l'une avec l'autre.

12. Outil de coupe selon l'une quelconque des revendications 8 à 11, **caractérisé en ce que** chacune desdites première et seconde sous-surfaces d'appui tangentielle (13a, 13b) est sensiblement perpendiculaire à la surface d'appui radiale (11).

13. Outil de coupe selon l'une quelconque des revendications 8 à 12, **caractérisé en ce que** chacune desdites surfaces d'appui sensiblement planes (50) de ladite plaquette de coupe (30) est divisée en une première sous-surface d'appui et une seconde sous-surface d'appui situées à une distance l'une de l'autre sur la face d'extrémité associée (32, 33) et séparées l'une de l'autre par une surface intermédiaire sur la face d'extrémité associée.

14. Outil de coupe selon l'une quelconque des revendications 8 à 13, **caractérisé en ce que** la surface d'appui auxiliaire (16) de l'élément de support (15) est plane ou au moins essentiellement plane et est inclinée à l'écart de la première sous-surface d'appui tangentielle (13a) et inclinée à l'écart de la seconde sous-surface d'appui tangentielle (13b), dans laquelle la surface d'appui auxiliaire (16) s'étend sensiblement dans un plan qui forme un angle supérieur à 180° et inférieur à 270°, de préférence supérieur à 180° et inférieur ou égal à 225°, plus préférentiellement de 190 à 215°, avec un plan (P1) dans lequel s'étend la première sous-surface d'appui tangentielle (13a) et qui forme un angle supérieur à 180° et inférieur à 270°, de préférence supérieur à 180° et inférieur ou égal à 225°, plus préférentiellement de 190 à 215°, avec un plan (P2) dans lequel s'étend la seconde sous-surface d'appui tangentielle (13b).

15. Outil de coupe selon l'une quelconque des revendications 1 à 7, **caractérisé en ce que** la surface d'appui tangentielle est plane et que la surface d'appui auxiliaire (16) de l'élément de support (15) est plane ou au moins essentiellement plane et est inclinée à l'écart de la surface d'appui tangentielle, dans laquelle la surface d'appui auxiliaire (16) s'étend sensiblement dans un plan qui forme un angle supérieur à 180° et inférieur à 270°, de préférence supérieur à 180° et inférieur ou égal à 225°, plus préférentiellement de 190 à 215°, avec un plan dans lequel s'étend la surface d'appui tangentielle.

16. Outil de coupe selon l'une quelconque des revendications 1 à 15, **caractérisé en ce que** chacune desdites surfaces d'appui sensiblement planes (50) de ladite plaquette de coupe (30) est en retrait par rapport à au moins une partie de chacune des arêtes longitudinales (47) de la face d'extrémité associée (32, 33).

17. Outil de coupe selon l'une quelconque des revendications 1 à 16, **caractérisé en ce que** :
- chacune des deux grandes faces latérales (35, 36) de ladite plaquette de coupe (30) est pourvue d'une surface plane (45) qui est traversée par le trou traversant (44) dans la plaquette de coupe et qui entoure un bord circulaire (59) à l'une des deux extrémités opposées de ce trou traversant (44), dans lequel la plaquette de coupe (30), lorsqu'elle est montée dans ledit au moins un logement d'insert (10, 10') dans l'une quelconque de ses quatre positions de travail, est configurée pour venir en appui contre la surface d'appui radiale (11) dans le logement d'insert par l'intermédiaire d'une zone de contact (A1) qui fait partie de ladite surface plane (45) sur l'une des deux grandes faces latérales (35, 36) et qui s'étend autour du bord circulaire (59) de celle-ci ; et
- la surface d'appui radiale (11) dans ledit au moins un logement d'insert (10, 10') entoure un évidement (21) formé dans le logement d'insert (10, 10'), dans lequel le trou de vis (20) dans le logement d'insert (10, 10') présente un bord supérieur (22) qui est reçu dans l'évidement (21), et dans lequel l'évidement (21) présente une extension dans au moins une direction le long de la surface d'appui radiale (11) qui est supérieure à un diamètre du bord circulaire (59) à chaque extrémité du trou traversant (44) dans la plaquette de coupe (30) de sorte que l'évidement (21) chevauche au moins une partie du bord circulaire (59) à l'extrémité du trou traversant (44) qui fait face au trou de vis (20) dans le logement d'insert (10, 10') lorsque la plaquette de coupe (30) est montée dans le logement d'insert (10, 10') dans l'une quelconque de ses quatre positions de travail.

18. Outil de coupe selon la revendication 17, **caractérisé en ce que** ledit évidement (21) présente la forme d'une ellipse à une interface avec la surface d'appui radiale (11) dans ledit au moins un logement d'insert (10, 10') avec un centre de l'ellipse coïncidant avec un axe central (23) dudit trou de vis (20).

19. Outil de coupe selon la revendication 18, **caractérisé en ce que** ledit évidement (21) est disposé avec un grand axe de ladite ellipse s'étendant essentiellement perpendiculairement à la surface d'appui axiale (12) dans le logement d'insert (10, 10').

20. Outil de coupe selon l'une quelconque des revendications 1 à 19, **caractérisé en ce que** l'outil de coupe (1, 1') est un outil de fraisage.
